# EUROPEAN PATENT APPLICATION

(11) **EP 1 970 196 A2**
(43) Date of publication of application: **17.09.2008**
(21) Application number: 08004155.1
(22) Date of filing: 06.03.2008
(51) Int. Cl.: B32B 27/00

(54) **Hydrophilic member and process for producing the same**

(30) Priority: 13.03.2007 JP 2007063715; 31.01.2008 JP 2008021381
(71) Applicant: FUJIFILM Corporation, Minato-ku Tokyo (JP)
(72) Inventor: Tanaka, Satoshi, Minami-Ashigara-shi Kanagawa (JP); Hoshi, Satoshi c/o Fujifilm Corporation, Ashigarakami-gun Kanagawa (JP); Fukuda, Makoto c/o Fujifilm Corporation, Ashigarakami-gun Kanagawa (JP)
(74) Representative: HOFFMANN EITLE

(57) **Abstract**

A hydrophilic member includes, in the following order: a substrate; an undercoat layer; and a hydrophilic layer formed by heating a hydrophilic composition containing a hydrophilic polymer having a structural unit represented by the formula (I-a) defined herein and a structural unit represented by the formula (I-b) defined herein, and a non-volatile catalyst.

## Description

### FIELD OF THE INVENTION

The present invention relates to a hydrophilic member having excellent antifouling properties, anti-fogging properties and quick-drying properties of water, etc. and having good anti-abrasion properties and scratch resistance provided on a surface of a substrate of every kind.

### BACKGROUND OF THE INVENTION

Various technologies for preventing the adhesion of an oil stain onto a surface of a member are proposed. In particular, in an optical member including antireflection films, optical filters, optical lenses, spectacle lenses and mirrors, when used by a person, a stain such as fingerprints, sebum, sweat and cosmetics adheres thereto, whereby not only its function is reduced, but the removal of the stain is complicated. Therefore, it is desired to apply an effective stain-preventing treatment.

Also, in recent years, with the spread of mobiles, a display has been frequently used outdoors. When a mobile is used under an environment where external light is made incident, this incident light is regularly reflected on the display surface, and a problem that the reflected light is mixed with displayed light, whereby a problem that a displayed image is hardly viewed or other problem is caused. For that reason, an antireflection optical member is frequently disposed on the display surface.

As such an antireflection optical member, for example, one obtained by stacking a high refractive index layer and a low refractive index layer each composed of a metal oxide on a surface of a transparent substrate; one obtained by forming a single layer of a low refractive index layer made of an inorganic or organic fluorinated compound, etc. on a surface of a transparent substrate; and one obtained by forming a coating layer containing a transparent fine particle on a surface of a transparent plastic film substrate, thereby making external light irregularly reflect on the uneven surface are known. Similar to the foregoing optical members, when used by a person, a stain such as fingerprints and sebum is easy to adhere onto the surface of such an antireflection optical member, or only a portion where the stain has adhered becomes high in reflection, thereby causing a problem that the strain is more conspicuous. In addition thereto, there was also encountered a problem that the removal of the stain is difficult because fine irregularities are usually present on the surface of the antireflection film.

Various technologies for forming on a surface of a solid member an antifouling function having performance to make a stain hardly adhere onto the surface or to make it easy to remove an adhered stain are proposed. In particular, as a combination of an antireflection member and an antifouling member, for example, an antifouling, anti-friction material having an antireflection film composed mainly of silicon dioxide and treated with an organosilicon substituent-containing compound (see, for example, JP-A-64-86101); and an antifouling, anti-friction CRT filter in which a surface of a substrate is coated with a silanol-terminated organic polysiloxane (see, for example, JP-A-4-338901) are proposed. Also, an antireflection film containing a silane compound including polyfluoroalkyl group-containing silane compounds (see, for example, JP-B-6-29332); and a combination of an optical thin film composed mainly of silicon dioxide and a copolymer of a perfluoroalkyl acrylate and an alkoxysilane group-containing monomer (see, for example, JP-A-7-16940) are proposed.

However, the antifouling layer which is formed by a conventional method is insufficient in antifouling properties, and in particular, it is hard to wipe off a stain such as fingerprints, sebum, sweat and cosmetics. Also, in the surface treatment with a material with low surface energy, such as fluorine or silicon materials, there is a cause for fears that the antifouling performance is reduced with a lapse of time. For that reason, the development of an antifouling member with excellent antifouling properties and durability is desired.

In a resin film which is used in many ways for a surface of an optical member, etc. or an inorganic material such as glasses and metals, it is general that its surface is hydrophobic or exhibits weak hydrophilicity. When a surface of a substrate using a resin film, an inorganic material or the like is hydrophilized, adhered droplets are uniformly spread on the surface of the substrate to form a homogeneous film. Therefore, the fogging of glass, a lens or a mirror can be effectively prevented, and such is useful for preventing devitrification to be caused due to hygroscopic moisture, securing visibility in the rain or the like. Furthermore, urban soot, a combustion product contained in exhaust gases from automobiles, etc. (for example, carbon black) or a hydrophobic pollutant such as fats and oils and sealant elution components hardly adheres thereto, and even when it adheres, it is simply dropped off by rainfall or water washing. Therefore, such a material is useful for various applications.

According to a surface treatment method for achieving hydrophilization which has hitherto been proposed, for example, etching treatment and plasma treatment, though the surface is highly hydrophilized, its effect is temporary, and the hydrophilized state cannot be maintained over a long period of time. Also a surface-hydrophilic coating film using a hydrophilic graft polymer as one of hydrophilic resins is also proposed (see, for example, Article of The Chemical Daily News, dated January 30, 1995). However, though this coating film has hydrophilicity to some extent, it cannot be said that the compatibility with a substrate is sufficient, and high durability is demanded.

Also, a film using titanium oxide has hitherto been known as a film with excellent surface hydrophilicity. For example, a technology for forming a photocatalyst-containing layer on a surface of a substrate to highly hydrophilize the surface corresponding to optical pumping of the photocatalyst is disclosed. It is reported that when this technology is applied to various composite materials such as glasses, lenses, mirrors, exterior materials and wet area materials, excellent antifouling properties can be imparted to such a composite material (see, for example, WO 96/29375 (corresponding to US Patent 6,013,372)). However, in view of the matters that a hydrophilic layer using titanium oxide does not have sufficient film strength and that a hydrophilizing effect is not revealed unless it is optically pumped, there is involved a problem that a use site is limited. Therefore, an antifouling member having durability and good anti-abrasion properties is demanded.

In order to achieve the foregoing problems, it has been found that while paying attention to a characteristic of a sol-gel organic/inorganic hybrid film, a hydrophilic surface which is provided with a crosslinking structure due to hydrolysis and polycondensation of a hydrophilic polymer and an alkoxide exhibits excellent anti-fogging properties and antifouling properties and has good anti-abrasion properties (see, for example, JP-A-2002-361800 (corresponding to US 2007/0122745A1)). However, a hydrophilic member having excellent antifouling properties, anti-fogging properties and quick-drying properties of water, etc. and good anti-abrasion properties and scratch resistance is further demanded.

### SUMMARY OF THE INVENTION

As a result of further advancing studies regarding a so-gel organic/inorganic hybrid film and developing the foregoing related-art technologies, an object of the invention is to provide a hydrophilic member having excellent antifouling properties, anti-fogging properties and quick-drying properties of water, etc. and having good anti-abrasion properties and scratch resistance on a surface of a substrate of every kind.

The present inventors have solved the foregoing problems by inventions having the following configurations.
[1] A hydrophilic member comprising, in the following order, a substrate, an undercoat layer and a hydrophilic layer formed by heating a hydrophilic composition containing
   (A) a hydrophilic polymer having a structural unit represented by the following formula (I-a) and a structural unit represented by the following formula (I-b), and
   (C) a non-volatile catalyst and heating (drying) the hydrophilic composition: 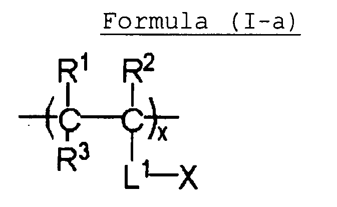 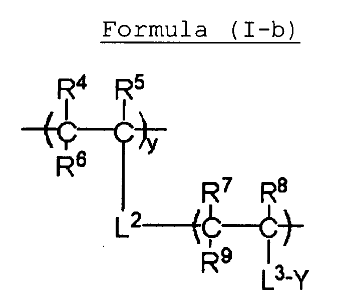
   In the formulae (I-a) and (I-b), R¹ to R⁹ each independently represents a hydrogen atom or a hydrocarbon group having not more than 8 carbon atoms; L¹, L² and L³ each independently represents a single bond or a polyvalent organic connecting group; x and y are each a composition ratio and represents a number satisfied with the relationships of 0 < x < 100, 0 < y < 100 and (x + y) = 100; X represents a partial structure represented by the formula (II), Si(OR¹⁰)ₘR¹¹₃₋ₘ, wherein m represents an integer of from 1 to 3, and R¹⁰ and R¹¹ each independently represents a hydrogen atom or a hydrocarbon group having not more than 8 carbon atoms; and Y represents -OH, -ORₐ, -CORₐ, -CO₂Rₑ, -CON(Rₐ)(R_{b}), -N(Rₐ)(R_{b}), -NHCOR_{d}, -NHCO₂Rₐ, -OCON(Rₐ)(R_{b}), -NHCON (Rₐ) (R_{b}), -SO₃Rₑ, -OSO₃Rₑ, -SO₂R_{d}, -NHSO₂R_{d}, -SO₂N(Rₐ)(R_{b}), -N(Rₐ)(R_{b})(R_{c}), -N(Rₐ) (R_{b}) (R_{c}) (R_{g}) -PO₃ (Rₑ) -(R_{f}) -OPO₃ (Rₑ) (R_{f}) or -PO₃ (R_{d}) (Rₑ), wherein Rₐ, R_{b} and R_{c} each independently represents a hydrogen atom or a linear, branched or cyclic alkyl group having from 1 to 8 carbon atoms; R_{d} represents a linear, branched or cyclic alkyl group having from 1 to 8 carbon atoms; Rₑ and R_{f} each independently represents a hydrogen atom, a linear, branched or cyclic alkyl group having from 1 to 8 carbon atoms, an alkali metal, an alkaline earth metal or an onium; and Rg represents a linear, branched or cyclic alkyl group having from 1 to 8 carbon atoms, a halogen atom, an inorganic anion or an organic anion.
[2] The hydrophilic member as set forth in [1], wherein the hydrophilic composition further contains (B) an alkoxide compound of an element selected among Si, Ti, Zr and Al.
[3] The hydrophilic member as set forth in [1] or [2], wherein the undercoat layer contains (C) a non-volatile catalyst.
[4] The hydrophilic member as set forth in any one of [1] to [3], wherein the non-volatile catalyst (C) is a metal complex constituted of a metal element selected among those belonging to the groups 2A, 3B, 4A and 5A of the periodic table and an oxo or hydroxyl oxygen-containing compound selected among β-diketones, keto esters, hydroxycarboxylic acids or esters thereof, amino alcohols and enolic active hydrogen compounds.
[5] The hydrophilic member as set forth in any one of [1] to [4], wherein the undercoat layer is a film formed by applying (coating with) a composition containing at least (B) an alkoxide compound of an element selected among Si, Ti, Zr and Al and (C) a non-volatile catalyst on the substrate and heating (drying) the composition.
[6] The hydrophilic member as set forth in any one of [1] to [5], wherein the hydrophilic composition further contains colloidal silica.
[7] A process for producing a hydrophilic member comprising forming an undercoat layer on a substrate; and
   subsequently applying a hydrophilic composition containing
   (A) a hydrophilic polymer having a structural unit represented by the following formula (I-a) and a structural unit represented by the following formula (I-b),
   (B) an alkoxide compound of an element selected among Si, Ti, Zr and Al, and
   (C) a non-volatile catalyst, and heating (drying) the hydrophilic composition to form a hydrophilic layer.

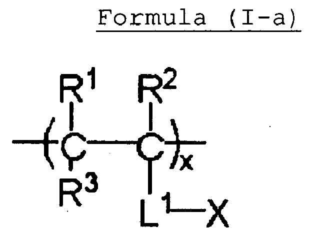

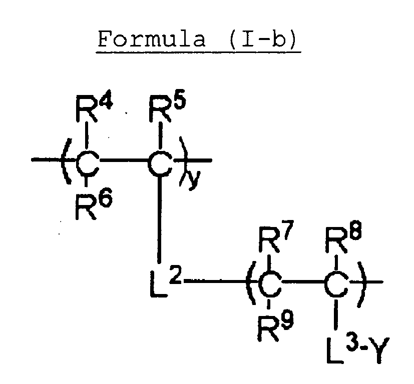

In the formulae (I-a) and (I-b), R¹ to R⁹ each independently represents a hydrogen atom or a hydrocarbon group having not more than 8 carbon atoms; L¹, L² and L³ each independently represents a single bond or a polyvalent organic connecting group; x and y are each a composition ratio and represents a number satisfied with the relationships of 0 < x < 100, 0 < y < 100 and (x + y) = 100; X represents a partial structure represented by the formula (II), Si(OR¹⁰)ₘR¹¹₃₋ₘ, wherein m represents an integer of from 1 to 3, and R¹⁰ and R¹¹ each independently represents a hydrogen atom or a hydrocarbon group having not more than 8 carbon atoms; and Y represents -OH, -ORₐ, -CORₐ, -CO₂Rₑ, -CON(Rₐ)(R_{b}), -N(Rₐ)(R_{b}), -NHCOR_{d}, -NHCO₂Rₐ -OCON (Rₐ)(R_{b}), -NHCON(Rₐ)(R_{b}), -SO₃Rₑ, -OSO₃Rₑ, -SO₂R_{d} -NHSO₂R_{d}, -SO₂N(Rₐ)(R_{b}), -N(Rₐ)(R_{b})(R_{c}), -N(Rₐ)(R_{b})(R_{c})(R_{g}), -PO₃(Rₑ)(R_{f}), -OPO₃(Rₑ)(R_{f}) Or -PO₃(R_{d})(Rₑ), wherein Rₐ, R_{b} and R_{c} each independently represents a hydrogen atom or a linear, branched or cyclic alkyl group having from 1 to 8 carbon atoms; R_{d} represents a linear, branched or cyclic alkyl group having from 1 to 8 carbon atoms; Rₑ and R_{f} each independently represents a hydrogen atom, a linear, branched or cyclic alkyl group having from 1 to 8 carbon atoms, an alkali metal, an alkaline earth metal or an onium; and Rg represents a linear, branched or cyclic alkyl group having from 1 to 8 carbon atoms, a halogen atom, an inorganic anion or an organic anion.

A hydrophilic member hydrophilic member comprising a substrate and a hydrophilic layer formed by applying (coating with) a hydrophilic composition containing the foregoing hydrophilic polymer (A) having a structural unit represented by the formula (I-a) and a structural unit represented by the formula (I-b) (this hydrophilic polymer will be hereinafter also referred to as "specified hydrophilic polymer") and the foregoing non-volatile catalyst (C) and preferably further containing the alkoxide compound (B) of an element selected among Si, Ti, Zr and Al (this alkoxide compound will be hereinafter also referred to as "specified alkoxide") and heating (drying) the hydrophilic composition and further comprising an undercoat layer provided between the substrate and the hydrophilic layer, has excellent antifouling properties and anti-fogging properties and having good anti-abrasion properties and scratch resistance.

The hydrophilic layer having a crosslinking structure formed by hydrolysis and polycondensation of a hydrophilic polymer having a hydrophilic group in a polymer chain thereof and an alkoxide of an element selected among Si, Ti, Zr and Al is a film with high strength because an organic/inorganic composite film having a high-density crosslinking structure is formed. Concretely, by dissolving the specified hydrophilic polymer (A) and the specified alkoxide (B) in an appropriate solvent and stirring the solution, hydrolysis and polycondensation proceed in the system to obtain a hydrophilic composition in a sol state, which is then applied on a substrate (support) and dried, thereby forming an organic/inorganic composite film having a hydrophilic functional group on a surface of the substrate and having a crosslinking structure to be formed through a reaction of the specified alkoxide (B) and a functional group reactive therewith. Furthermore, in the hydrolysis and polycondensation in the system, a reaction site capable of forming crosslinking increases due to the specified alkoxide (B), and an organic/inorganic composite film having a firm crosslinking structure with higher density is formed. Therefore, it is thought that the resulting film of the hydrophilic layer has high strength, reveals excellent anti-abrasion properties and is able to maintain high surface hydrophilicity over a long period of time. Also, in the case where water adheres to a surface having very high hydrophilicity, since the water is spread, a contact area with an air interface increases, and a rate of drying of water becomes very fast, whereby a coating film with excellent quick-drying properties is formed.

In the related-art technologies, by introducing a silane coupling group into an end of a hydrophilic polymer, in forming a hydrophilic layer, the hydrophilic polymer was unevenly distributed in a grafted state on the surface, a degree of freedom of the polymer chain increased, and the compatibility with water was enhanced, thereby revealing high hydrophilicity. In the invention, by introducing a silane coupling group into a side chain of a polymer and further forming a hydrophilic graft polymer, a graft polymer chain can be unevenly distributed on a film surface. Also, when the silane coupling group is introduced into the side chain of the polymer, the affinity between the alkoxide as an inorganic component and the hydrophilic polymer is enhanced, and an organic/inorganic hybrid hydrophilic layer in which the organic component and the inorganic component are uniformly dispersed is obtained. According to this, it is thought that a hydrophilic member having very high hydrophilicity and excellent anti-abrasion properties is obtained.

Furthermore, in the invention, the non-volatile catalyst (C) is used as a catalyst. Since even in a drying step in preparing a hydrophilic member, the non-volatile catalyst does not volatilize and exists in the film while keeping its activity, it is possible to further advance a crosslinking reaction with a lapse of time. According to this, a coating film with very high strength is formed. Moreover, since the non-volatile catalyst exists without losing its activity even at an interface with the substrate, the reaction between the substrate and the hydrophilic layer proceeds with a lapse of time so that high adhesion can be realized. According to this, it is thought that a hydrophilic member having excellent anti-abrasion properties can be obtained.

In the invention, it is effective to further provide an undercoat layer between the substrate (support) and the hydrophilic layer. The adhesion between the substrate and the hydrophilic layer is realized due to a reaction of reactive groups on the substrate surface and the hydrophilic layer each other. Actually, in the case where a reactive group does not exist on the substrate so much, it is possible to bring the substrate into contact intimate contact with the hydrophilic layer via an undercoat layer in which a number of reactive groups exist. By introducing the non-volatile catalyst (C) into the undercoat layer, too, a coating film with very high strength and high adhesion is formed due to the same effects as described previously, and it is possible to obtain a hydrophilic member having very excellent anti-abrasion properties.

According to the invention, it is possible to provide a hydrophilic member having excellent antifouling properties and anti-fogging properties and having good anti-abrasion properties and scratch resistance on a surface of a substrate of every kind.

### DETAILED DESCRIPTION OF THE INVENTION

Each of the components which are contained in the hydrophilic composition to be used in forming the hydrophilic member of the invention are hereunder described.

### [(A) Hydrophilic polymer represented by the formulae (I-a) and (I-b)]

The specified hydrophilic polymer (A) which can be used in the invention has structural units represented by the following formulae (I-a) and (I-b).

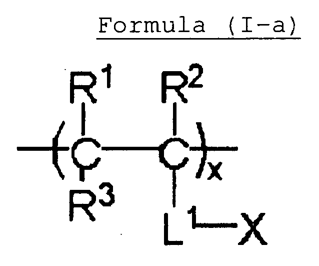

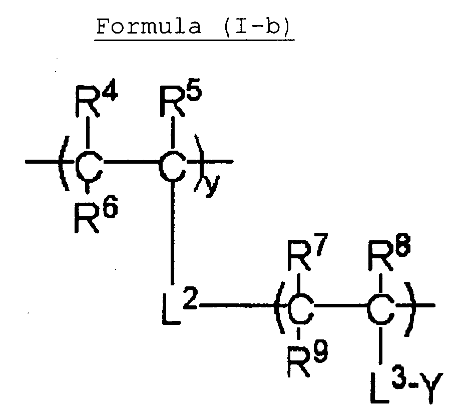

In the formulae (I-a) and (I-b), R¹ to R⁹ each independently represents a hydrogen atom or a hydrocarbon group having not more than 8 carbon atoms; L¹, L² and L³ each independently represents a single bond or a polyvalent organic connecting group; x and y are each a composition ratio and represents a number satisfied with the relationships of 0 < x < 100, 0 <y<100 and (x + y) = 100; X represents a partial structure represented by the formula (II), Si(OR¹⁰)ₘR¹¹₃₋ₘ, wherein m represents an integer of from 1 to 3, and R¹⁰ and R¹¹each independently represents a hydrogen atom or a hydrocarbon group having not more than 8 carbon atoms; and Y represents -OH, -ORₐ, -CORₐ, -CO₂Rₑ, -CON(Rₐ)(R_{b}), -N(Rₐ)(R_{b}), -NHCOR_{d}, -NHCO₂Rₐ, -OCON(Ra)(Rb), -NHCON(Rₐ)(R_{b}), -SO₃Rₑ, -OSO₃Rₑ, -SO₂R_{d}, -NHSO₂R_{d}, -SO₂N(Rₐ)(R_{b}), -N(Rₐ)(R_{b})(R_{c}), -N (Rₐ)(R_{b})(R_{c})(R_{g}), -PO₃(Rₑ)(R_{f}), -OPO₃(Rₑ)(R_{f}) or -PO₃(R_{d})(Rₑ), wherein Rₐ, R_{b} and R_{c} each independently represents a hydrogen atom or a linear, branched or cyclic alkyl group having from 1 to 8 carbon atoms; R_{d} represents a linear, branched or cyclic alkyl group having from 1 to 8 carbon atoms; Rₑ and R_{f} each independently represents a hydrogen atom, a linear, branched or cyclic alkyl group having from 1 to 8 carbon atoms, an alkali metal, an alkaline earth metal or an onium; and Rg represents a linear, branched or cyclic alkyl group having from 1 to 8 carbon atoms, a halogen atom, an inorganic anion or an organic anion.

When R¹ to R⁹ each represents a hydrocarbon group, examples of the hydrocarbon group include an alkyl group and an aryl group; and a linear, branched or cyclic alkyl group having from 1 to 8 carbon atoms is preferable. Specific examples thereof include a methyl group, an ethyl group, a propyl group, a butyl group, a pentyl group, a hexyl group, a heptyl group, an octyl group, an isopropyl group, an isobutyl group, an s-butyl group, a t-butyl group, an isopentyl group, a neopentyl group, a 1-methylbutyl group, an isohexyl group, a 2-ethylhexyl group, a 2-methylhexyl group and a cyclopentyl group.

From the viewpoints of effects and easiness of availability, R¹ to R⁹ are each preferably a hydrogen atom, a methyl group or an ethyl group.

Such a hydrocarbon group may further have a substituent. When the alkyl group has a substituent, the substituted alkyl group is constituted of a linkage between a substituent and an alkylene group. Here, a monovalent non-metal atomic group exclusive of hydrogen is used as the substituent. Preferred examples of the substituent include a halogen atom (for example, -F, -Br, -Cl and -I), a hydroxyl group, an alkoxy group, an aryloxy group, a mercapto group, an alkylthio group, an arylthio group, an alkyldithio group, an aryldithio group, an amino group, an N-alkylamino group, an N,N-diarylamino group, an N-alkyl-N-arylamino group, an acyloxy group, a carbamoyloxy group, an N-alkylcarbamoyloxy group, an N-arylcarbamoyloxy group, an N,N-dialkylcarbamoyloxy group, an N,N-diarylcarbamoyloxy group, an N-alkyl-N-arylcarbamoyloxy group, an alkylsulfoxy group, an arylsulfoxy group, an acylthio group, an acylamino group, an N-alkylacylamino group, an N-arylacylamino group, a ureido group, an N'-alkylureido group, an N',N'-dialkylureido group, an N'-arylureido group, an N',N'-diarylureido group, an N'-alkyl-N'-arylureido group, an N-alkylureido group, an N-arylureido group, an N'-alkyl-N-alkylureido group, an N'-alkyl-N-arylureido group, an N',N'-dialkyl-N-alkylureido group, an N',N'-dialkyl-N-arylureido group, an N'-aryl-N-alkylureido group, an N'-aryl-N-arylureido group, an N',N'-diaryl-N-alkylureido group, an N',N'-diaryl-N-arylureido group, an N'-alkyl-N'-aryl-N-alkylureido group, an N'-alkyl-N'-aryl-N-arylureido group, an alkoxycarbonylamino group, an aryloxycarbonylamino group, an N-alkyl-N-alkoxycarbonylamino group, an N-alkyl-N-aryloxycarbonylamino group, an N-aryl-N-alkoxycarbonylamino group, an N-aryl-N-aryloxycarbonylamino group, a formyl group, an acyl group, a carboxyl group, an alkoxycarbonyl group, an aryloxycarbonyl group, a carbamoyl group, an N-alkylcarbamoyl group, an N,N-dialkylcarbamoyl group, an N-arylcarbamoyl group, an N,N-diarylcarbamoyl group, an N-alkyl-N-arylcarbamoyl group, an alkylsulfinyl group, an arylsulfinyl group, an alkylsulfonyl group, an arylsulfonyl group, a sulfo group (-SO₃H) or a conjugated base group thereof (hereinafter referred to as "sulfonate group"), an alkoxysulfonyl group, an aryloxysulfonyl group, a sulfinamoyl group, an N-alkylsulfinamoyl group, an N,N-dialkylsulfinamoyl group, an N-arylsulfinamoyl group, an N,N-diarylsulfinamoyl group, an N-alkyl-N-arylsulfinamoyl group, a sulfamoyl group, an N-alkylsulfamoyl group, an N,N-dialkylsulfamoyl group, an N-arylsulfamoyl group, an N,N-diarylsulfamoyl group, an N-alkyl-N-arylsulfamoyl group, a phosphono group (-PO₃H₂) or a conjugated base group thereof (hereinafter referred to as "phosphonate group"), a dialkylphosphono group (-PO₃(alkyl)₂), a diarylphosphono group (-PO₃(aryl)₂), an alkylarylphosphono group (-PO₃(alkyl)(aryl)), a monoalkylphosphono group (-PO₃H(alkyl)) or a conjugated base group thereof (hereinafter referred to as "alkylphosphonate group"), a monoarylphosphono group (-PO₃H(aryl))) or a conjugated base group thereof (hereinafter referred to as "arylphosphonate group"), a phosphonoxy group (-OPO₃H₂) or a conjugated base group thereof (hereinafter referred to as "phosphonatoxy group"), a dialkylphosphonoxy group (-OPO₃(alkyl)₂), a diarylphosphonoxy group (-OPO₃(aryl)₂), an alkylarylphosphonoxy group (-OPO(alkyl)(aryl)), a monoalkylphosphonoxy group (-OPO₃H(alkyl)) or a conjugated base group thereof (hereinafter referred to as "alkylphosphonatoxy group"), a monoarylphosphonoxy group (-OPO₃H(aryl)) or a conjugated base group thereof (hereinafter referred to as "arylphosphonatoxy group"), a morpholino group, a cyano group, a nitro group, an aryl group, an alkenyl group and an alkynyl group.

In these substituents, specific examples of the alkyl group include the same alkyl groups as those in R¹ to R⁹; and specific examples of the aryl group include a phenyl group, a biphenyl group, a naphthyl group, a tolyl group, a xylyl group, a mesityl group, a cumenyl group, a chlorophenyl group, a bromophenyl group, a chloromethylphenyl group, a hydroxyphenyl group, a methoxyphenyl group, an ethoxyphenyl group, a phenoxyphenyl group, an acetoxyphenyl group, a benzoyloxyphenyl group, a methylthiophenyl group, a phenylthiophenyl group, a methylaminophenyl group, a dimethylaminophenyl group, an acetylaminophenyl group, a carbxoyphenyl group, a methoxycarbonylphenyl group, an ethoxyphenylcarbonyl group, a phenoxycarbonylphenyl group, an N-phenylcarbamoylphenyl group, a phenyl group, a cyanophenyl group, a sulfophenyl group, a sulfonatophenyl group, a phosphonophenyl group and a phosphonatophenyl group. Also, examples of the alkenyl group include a vinyl group, a 1-propenyl group, a 1-butenyl group, a cinnamyl group and a 2-chloro-1-ethenyl group; and examples of the alkynyl group include an ethynyl group, a 1-propynyl group, a 1-butynyl group and a trimethylsilylethynyl group. Examples of G¹ in an acyl group (G¹CO-) include hydrogen and the foregoing alkyl groups and aryl groups.

Of these substituents, a halogen atom (for example, -F, -Br, -Cl and -I), an alkoxy group, an aryloxy group, an alkylthio group, an arylthio group, an N-alkylamino group, an N,N-dialkylamino group, an acyloxy group, an N-alkylcarbamoyloxy group, an N-arylcarbamoyloxy group, an acylamino group, a formyl group, an acyl group, a carboxyl group, an alkoxycarbonyl group, an aryloxycarbonyl group, a carbamoyl group, an N-alkylcarbamoyl group, an N,N-dialkylcarbamoyl group, an N-arylcarbamoyl group, an N-alkyl-N-arylcarbamoyl group, a sulfo group, a sulfonate group, a sulfamoyl group, an N-alkylsulfamoyl group, an N,N-dialkylsulfamoyl group, an N-arylsulfamoyl group, an N-alkyl-N-arylsulfamoyl group, a phosphono group, a phosphonate group, a dialkylphosphono group, a diarylphosphono group, a monoalkylphosphono group, an alkylphosphonate group, a monoarylphosphono group, an arylphosphonate group, a phosphonoxy group, a phosphonatoxy group, an aryl group and an alkenyl group are more preferable.

On the other hand, as the alkylene group in the substituted alkyl group, an alkylene group obtained by eliminating any one of hydrogen atoms on each of the foregoing alkyl groups to convert the resulting alkyl group into a divalent organic residue can be exemplified. Preferred examples thereof include a linear alkylene group having from 1 to 12 carbon atoms, a branched alkylene group having from 3 to 12 carbon atoms and a cyclic alkylene group having from 5 to 10 carbon atoms. Specific examples of the preferred substituted alkyl group obtained by combining these substituent and alkylene group include a chloromethyl group, a bromomethyl group, a 2-chloroethyl group, a trifluoromethyl group, a methoxymethyl group, a methoxyethoxyethyl group, an allyloxymethyl group, a phenoxymethyl group, a methylthiomethyl group, a tolylthiomethyl group, an ethylaminoethyl group, a diethylaminopropyl group, a morpholinopropyl group, an acetyloxymethyl group, a benzoyloxymethyl group, an N-cyclohexylcarbamoyloxyethyl group, an N-phenylcarbamoyloxyethyl group, an acetylaminoethyl group, an N-methylbenzoylaminopropyl group, a 2-oxyethyl group, a 2-oxypropyl group, a carboxypropyl group, a methoxycarbonylethyl group, an allyloxycarbonylbutyl group, a chlorophenoxycarbonylmethyl group, a carbamoylmethyl group, an N-methylcarbamoylethyl group, an N,N-dipropylcarbamoylmethyl group, an N-(methoxyphenyl)carbamoylethyl group, an N-methyl-N-(sulfophenyl)carbamoylmethyl group, a sulfobutyl group, a sulfonatobutyl group, a sulfamoylbutyl group, an N-ethylsulfamoylmethyl group, an N,N-dipropylsulfamoylpropyl group, an N-tolylsulfamoylpropyl group, an N-methyl-N-(phosphonophenyl)sulfamoyloctyl group, a phosphonobutyl group, a phosphonatohexyl group, a diethylphosphonobutyl group, a diphenylphosphonopropyl group, a methylphosphonobutyl group, a methylphosphonatobutyl group, a tolylphosphonohexyl group, a tolylphosphonatohexyl group, a phosphonoxypropyl group, a phosphonatoxybutyl group, a benzyl group, a phenethyl group, an α-methylbenzyl group, a 1-methyl-1-phenylethyl group, a p-methylbenzyl group, a cinnamyl group, an allyl group, a 1-propenylmethyl group, a 2-butenyl group, a 2-methylallyl group, a 2-methylpropenylmethyl group, a 2-propenyl group, a 2-butynyl group and a 3-butynyl group.

L¹, L² and L³ each independently represents a single bond or a polyvalent organic connecting group. The "single bond" as referred to herein means that for example, when L¹ is concerned, the principal chain of the polymer is bonded directly to X without a connecting chain. Furthermore, the "organic connecting group" as referred to herein means a connecting group composed of a non-metal atom. Specific examples of the connecting group include those composed of from 1 to 200 carbon atoms, from 0 to 150 nitrogen atoms, from 0 to 200 oxygen atoms, from 0 to 400 hydrogen atoms and from 0 to 100 sulfur atoms. More specific examples of the connecting group include the following structural units or those constituted through a combination thereof.

-CH₂- -O-

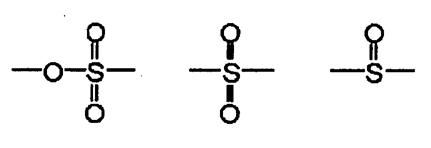

-S-

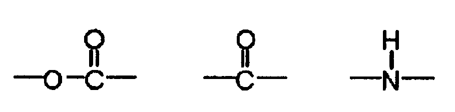

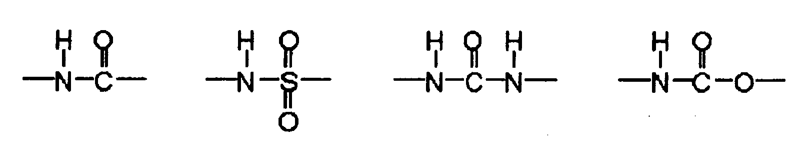

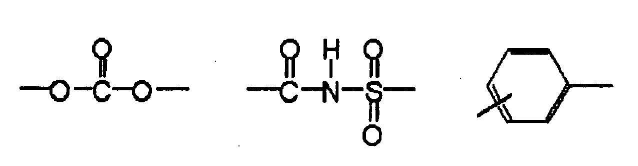

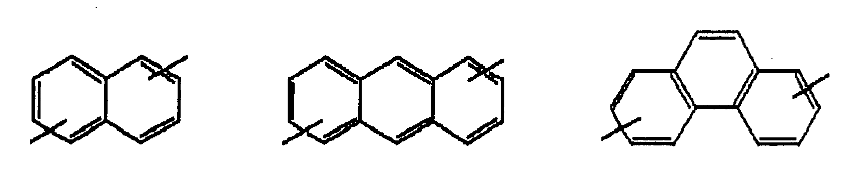

Also, L¹, L² and L³ may be each independently formed from a polymer or an oligomer. Concretely, it is preferable that the polymer or oligomer includes polyacrylates, polymethacrylates, polyacrylonitriles, polyvinyls or polystyrenes each composed of an unsaturated double bond based monomer, or the like. Other preferred examples thereof include poly(oxyalkylenes), polyurethanes, polyureas, polyesters, polyamides, polyimides, polycarbonates, polyamino acids and polysiloxanes. Of these, polyacrylates, polymethacrylates, polyacrylonitriles, polyvinyls and polystyrenes are preferable, with polyacrylates and polymethacrylates being more preferable.

The structural unit which is used in such a polymer or oligomer may be used singly or in combination of two or more kinds thereof. In the case where L¹, L² and L³ are each a polymer or an oligomer, the number of constitutional elements is not particularly limited, and its molecular weight is preferably from 1, 000 to 1, 000, 000, more preferably from 1,000 to 500, 000, and most preferably from 1,000 to 200,000.

X represents a partial structure represented by the formula (II), Si(OR¹⁰)ₘR¹¹₃₋ₘ, wherein m represents an integer of from 1 to 3, and R¹⁰ and R¹¹ each independently represents a hydrogen atom or a hydrocarbon group having not more than 8 carbon atoms. Examples of the hydrocarbon group having not more than 8 carbon atoms include the same hydrocarbon groups as those in the hydrocarbon group represented by R¹ to R⁹.

x and y are each a composition ratio of the structural unit represented by the formula (I-a) and the structural formula represented by the formula (I-b)in the specified hydrophilic polymer (A). x and y each represents a number satisfied with the relationships of 0 < x < 100, 0 < y < 100 and (x + y) = 100. The composition ratio x is preferably in the range of 10 < x < 99, and more preferably in the range of 50 < x < 99. The composition ratio y is preferably in the range of 1 < y < 99, and more preferably in the range of 1 <y < 50.

Here, (I-a) and (I-b) which are each a structural unit for constituting the polymer chain may be all the same or may be one containing plural different structural units. In that case, it is preferable that the composition ratios of the structural unit corresponding to the formula (I-a) and the structural unit corresponding to the formula (I-b) fall within the foregoing ranges.

The synthesis method of the specified hydrophilic polymer (graft polymer) (A) is basically classified into three methods of (1) a method of polymerizing a branched monomer from a trunk polymer, (2) a method of bonding a branched polymer to a trunk polymer and (3) a method of introducing a high-molecular weight polymerization site to achieve polymerization (macromer method). Though the specified hydrophilic polymer (A) which is used in the invention can be synthesized by using any of these three methods, the "macromer method" (3) is especially excellent from the viewpoints of manufacture aptitude and control of the film structure.

The synthesis of a graft polymer using a macromonomer (macromer) is described in *Shin Kobunshi Jikkengaku* (New Polymer Experimentology) *2:* Synthesis and Reaction of Polymer, edited by The Society of Polymer Science, Japan and published by Kyoritsu Shuppan Co., Ltd. (1995) . The synthesis of a graft polymer using a macromonomer (macromer) is also described in detail in Chemistry and Industry of Macromonomer, written by Yuya YAMASHITA, et al. and published by Industrial Publishing & Consulting, Inc. (1989). First of all, the specified hydrophilic polymer (A) which is used in the invention can be synthesized by polymerizing a hydrophilic macromonomer synthesized by the foregoing method (corresponding to a precursor of the specified hydrophilic polymer side chain) with a chain transfer agent, preferably a chain transfer agent having a functional group capable of reacting with the specified alkoxide (B).

Also, the foregoing specified hydrophilic polymer (A) may be a copolymer with other monomer as described later. Examples of other monomer to be used include known monomers, for example, acrylic esters, methacrylic esters, acrylamides, methacrylates, vinyl esters, styrenes, acrylic acid, methacrylic acid, acrylonitrile, maleic anhydride and maleic acid imide. By copolymerizing with such a monomer, various physical properties such as fabrication properties, film strength, hydrophilicity, hydrophobicity, solubility, reactivity and stability can be improved.

Specific examples of the acrylic ester include methyl acrylate, ethyl acrylate, n-propyl or isopropyl acrylate, n-butyl, isobutyl, sec-butyl or t-butyl acrylate, amyl acrylate, 2-ethylhexyl acrylate, dodecyl acrylate, chloroethyl acrylate, 2-hydroxyethyl acrylate, 2-hydroxypropyl acrylate, 2-hydroxypentyl acrylate, cyclohexyl acrylate, allyl acrylate, trimethylolpropane monoacrylate, pentaerythritol monoacrylate, benzyl acrylate, methoxybenzyl acrylate, chlorobenzyl acrylate, hydroxybenzyl acrylate, hydroxyphenethyl acrylate, dihydroxyphenethyl acrylate, furfuryl acrylate, tetrahydrofurfuryl acrylate, phenyl acrylate, hydroxyphenyl acrylate, chlorophenyl acrylate, sulfamoylphenyl acrylate and 2-(hydroxyphenylcarbonyloxy)ethyl acrylate.

Specific examples of the methacrylic ester include methyl methacrylate, ethyl methacrylate, n-propyl or isopropyl methacrylate, n-butyl, isobutyl, sec-butyl or t-butyl methacrylate, amyl methacrylate, 2-ethylhexyl methacrylate, dodecyl methacrylate, chloroethyl methacrylate, 2-hydroxyethyl methacrylate, 2-hydroxypropyl methacrylate, 2-hydroxypentyl methacrylate, cyclohexyl methacrylate, allyl methacrylate, trimethylolpropane monomethacrylate, pentaerythritol monomethacrylate, benzyl methacrylate, methoxybenzyl methacrylate, chlorobenzyl methacrylate, hydroxybenzyl methacrylate, hydroxyphenethyl methacrylate, dihydroxyphenethyl methacrylate, furfuryl methacrylate, tetrahydrofurfuryl methacrylate, phenyl methacrylate, hydroxyphenyl methacrylate, chlorophenyl methacrylate, sulfamoylphenyl methacrylate and 2-(hydroxyphenylcarbonyloxy)ethyl methacrylate.

Specific examples of the acrylamide include acrylamide, N-methylacrylamide, N-ethylacrylamide, N-propylacrylamide, N-butylacrylamide, N-benzylacrylamide, N-hydroxyethylacrylamide, N-phenylacrylamide, N-toltylacrylamide, N-(hydroxyphenyl)acrylamide, N-(sulfamoylphenyl)acrylamide, N-(phenylsulfonyl)acrymaide, N-(tolylsulfonyl)acrylamide, N,N-dimethylacrylamide, N-methyl-N-phenylacrylamide and N-hydroxyethyl-N-methylacrylamide.

Specific examples of the methacrylamide include methacrylamide, N-methylmethacrylamide, N-ethylmethacrylamide, N-propylmethacrylamide, N-butylmethacrylamide, N-benzylmethacrylamide, N-hydroxyethylmethacrylamide, N-phenylmethacrylamide, N-toltylmethacrylamide, N-(hydroxyphenyl)methacrylamide, N-(sulfamoylphenyl)methacrylamide, N-(phenylsulfonyl)methacrymaide, N-(tolylsulfonyl)methacrylamide, N,N-dimethylmethacrylamide, N-methyl-N-phenylmethacrylamide and N-hydroxyethyl-N-methylmethacrylamide.

Specific examples of the vinyl ester include vinyl acetate, vinyl butyrate and vinyl benzoate.

Specific examples of the styrene include styrene, methylstyrene, dimethylstyrene, trimethylstyrene, ethylstyrene, propylstyrene, cyclohexylstyrene, chloromethylstyrene, trifluoromethylstyrene, ethoxymethylstyrene, acetoxymethylstyrene, methoxystyrene, dimethoxystyrene, chlorostyrene, dichlorostyrene, bromostyrene, iodostyrene, fluorostyrene and carboxystyrene.

With respect to the proportion of such other monomer to be used for the synthesis of a copolymer, a sufficient amount for improving various physical properties is necessary. However, in order that the function as the hydrophilic layer may be sufficient and that advantages to be brought by adding the specified hydrophilic polymer (A) may be sufficiently obtained, it is preferable that the proportion is not excessively high. Accordingly, a total proportion of other monomer in the specified hydrophilic polymer (A) is preferably not more than 80 % by mass (% by weight), and more preferably not more than 50 % by mass.

Also, the specified hydrophilic polymer (A) may be a copolymer with other hydrophilic monomer, and the structural unit represented by the formula (I-b) may be a copolymer with other hydrophilic monomer. With respect to the proportion of such other hydrophilic monomer, a sufficient amount for improving various physical properties is necessary. However, in order that the function as the graft polymer may be sufficient and that advantages to be brought by adding the specified hydrophilic polymer (A) may be sufficiently obtained, it is preferable that the proportion is not excessively high. Accordingly, a total proportion of such a hydrophilic monomer in the specified hydrophilic polymer (A) is preferably not more than 80 % by mass, and more preferably not more than 50 % by mass.

A mass average molecular weight of the macromonomer which is the structural unit represented by the formula (I-b) is in the range of from 1,000 to 5,000,000, preferably in the range of from 2,000 to 1,000,000, and more preferably in the range of from 5,000 to 800,000.

A mass average molecular weight of the specified hydrophilic polymer (A) is in the range of from 1,000 to 10,000,000, preferably in the range of from 5,000 to 5, 000, 000, and more preferably in the range of from 10,000 to 2, 000, 000.

Specific examples of the specified hydrophilic polymer (A) [Illustrative Compounds (1) to (50)] will be given below along with mass average molecular weights (M.W.) thereof, but it should not be construed that the invention is limited thereto. In the following specific examples, it is meant by numerical values as described by the side of parentheses of respective structural units on the polymer principal chain that the polymer is a random copolymer in which the respective structural units are contained in the designated molar ratio; and it is meant by numerical values as described by the side of parentheses of respective structural units on the graft polymer chain that the respective structural units are randomly repeated in the designated numbers.

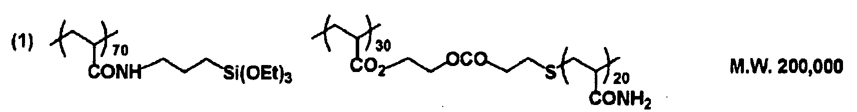

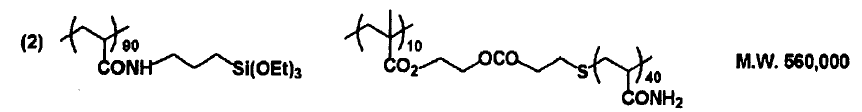

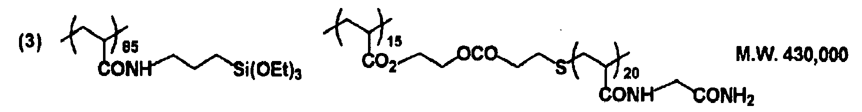

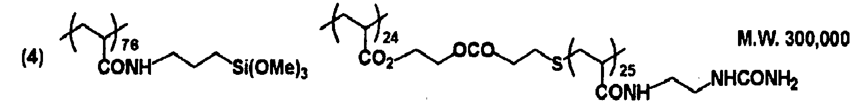

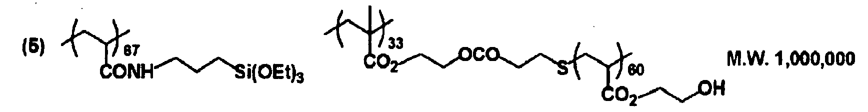

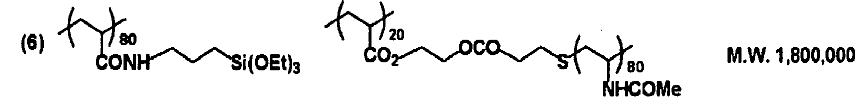

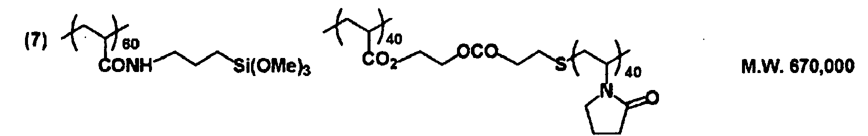

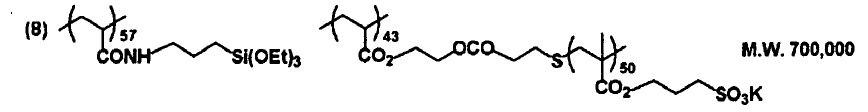

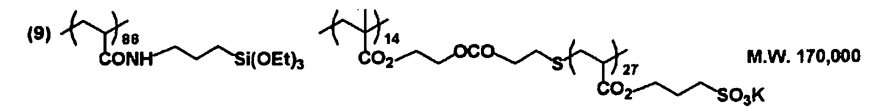

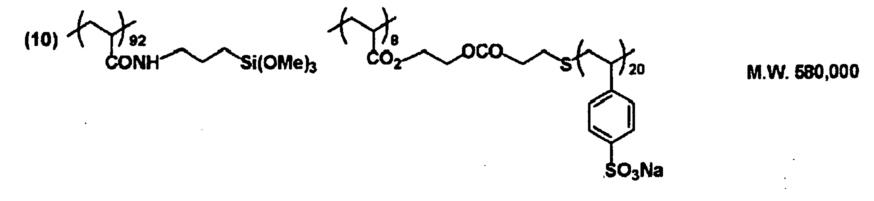

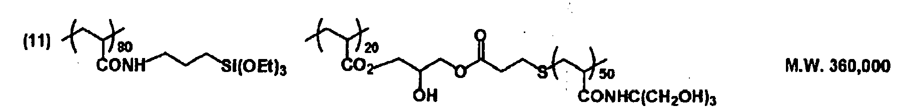

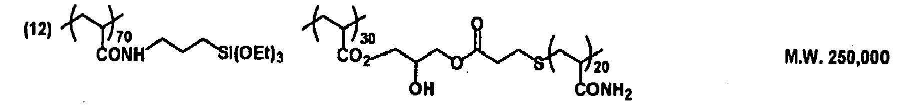

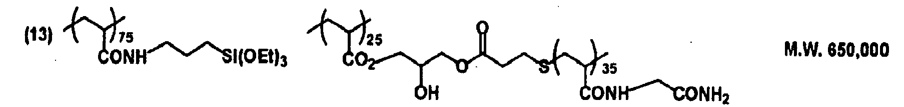

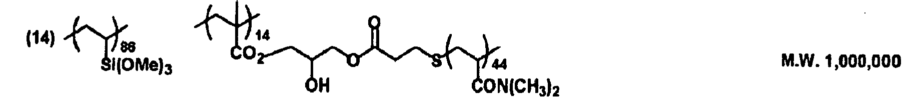

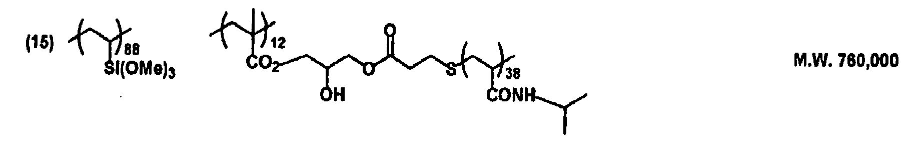

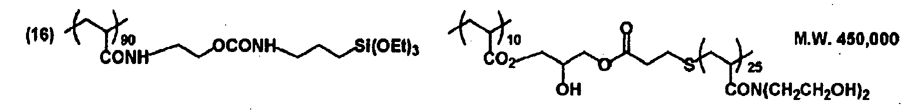

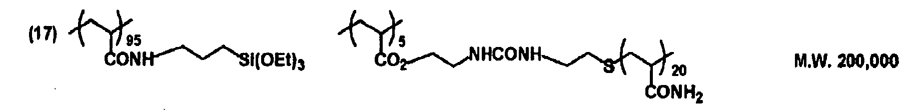

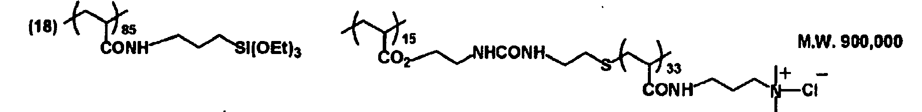

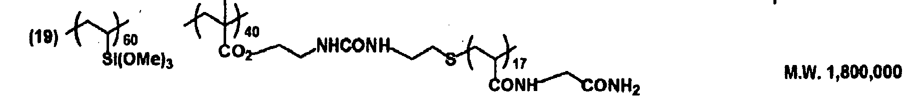

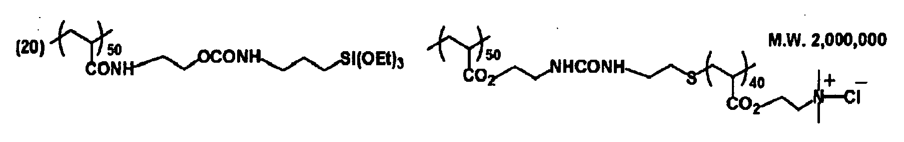

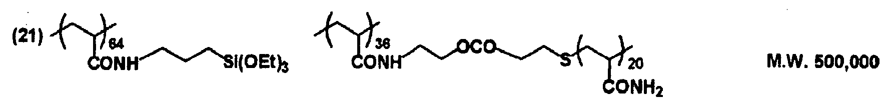

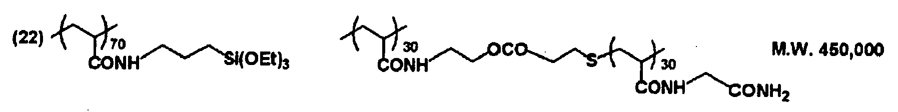

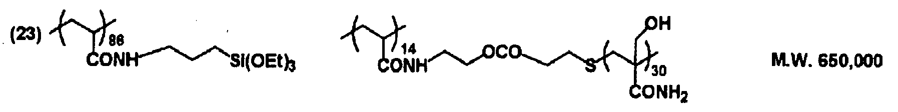

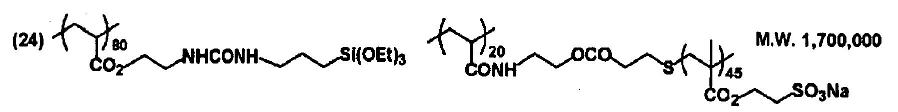

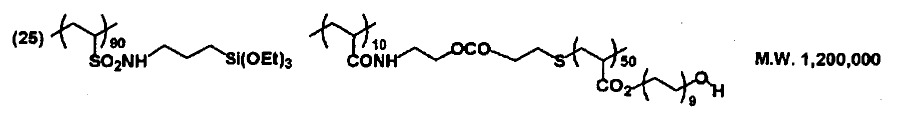

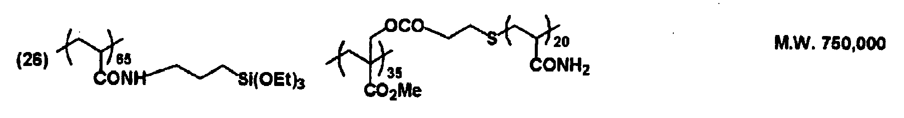

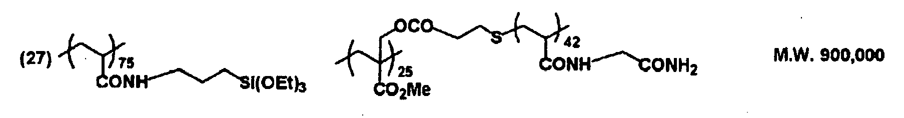

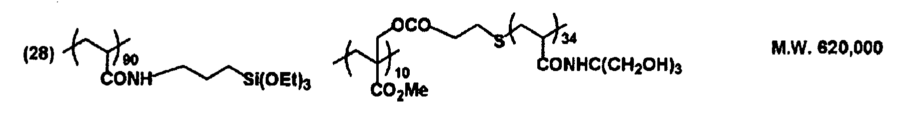

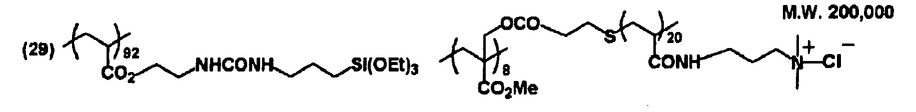

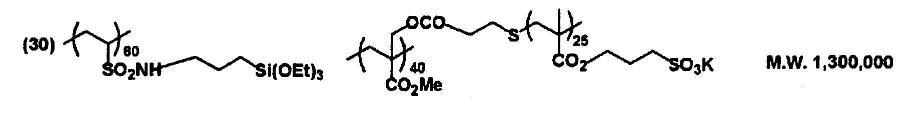

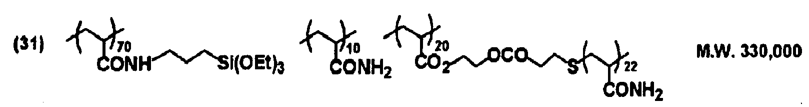

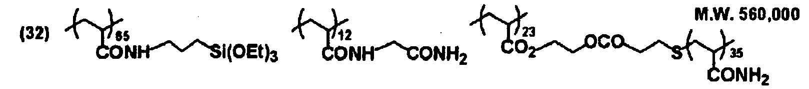

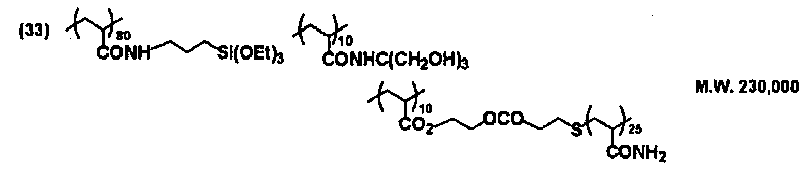

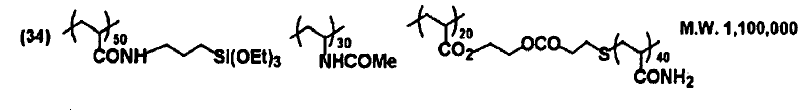

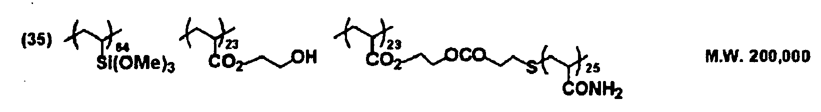

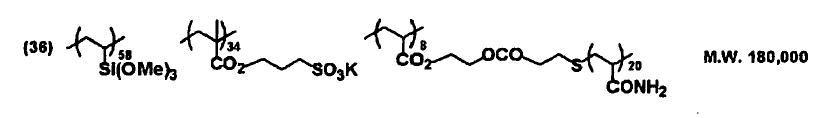

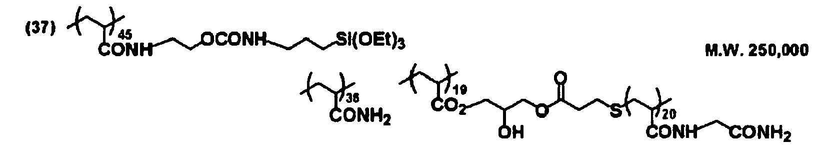

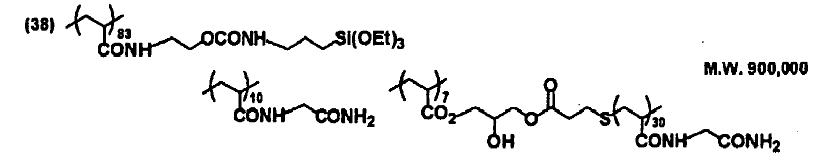

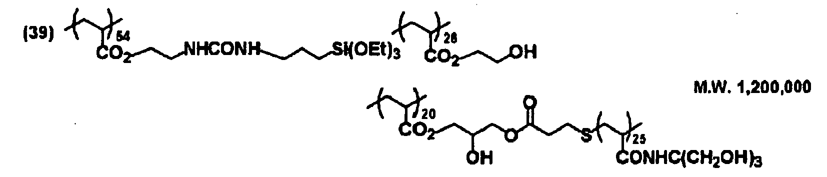

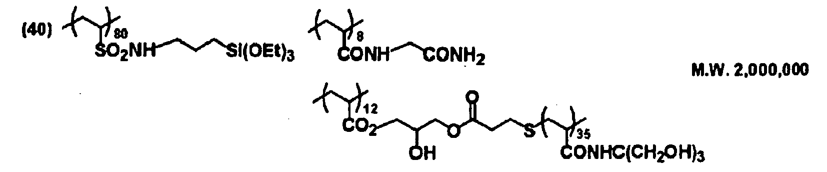

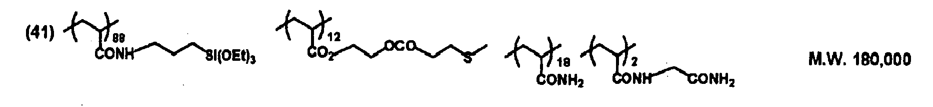

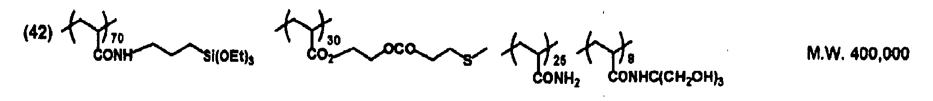

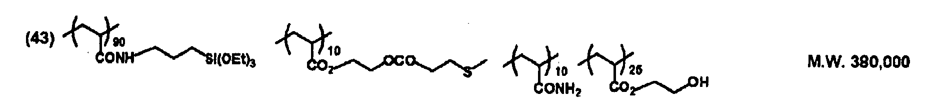

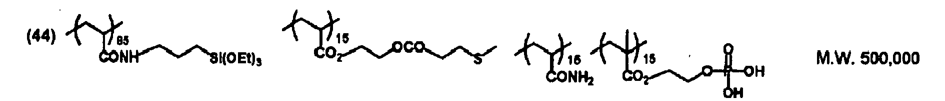

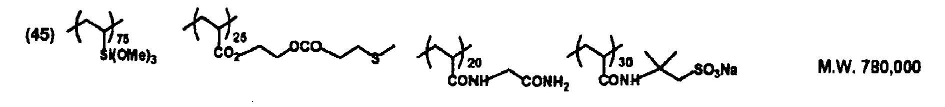

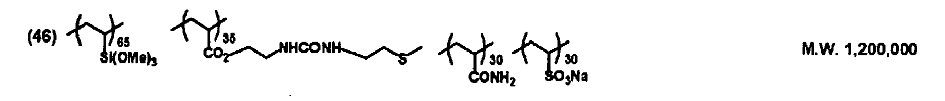

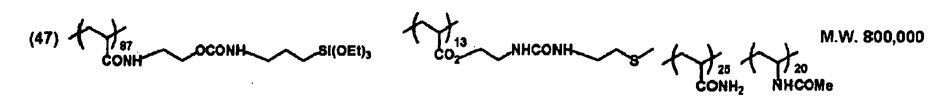

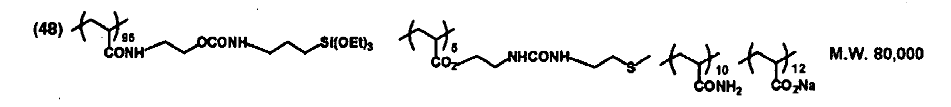

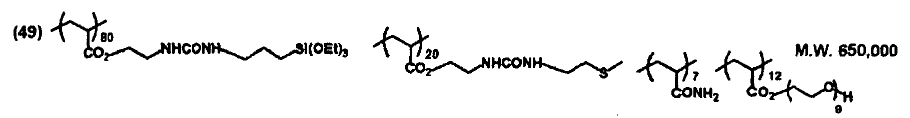

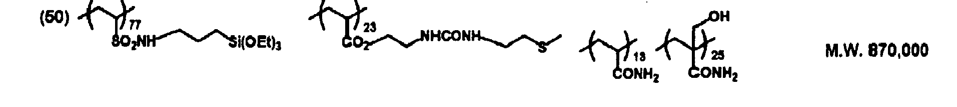

From the viewpoints of curing properties and hydrophilicity, the specified hydrophilic polymer (A) according to the invention is preferably contained in an amount in the range of from 5 to 95 % by mass, more preferably from 15 to 90 % by mass, and most preferably from 20 to 85 % by mass in terms of a non-volatile component of the hydrophilic composition of the invention. The specified hydrophilic polymer (A) may be used singly or in combination of two or more kinds thereof. The "non-volatile component" as referred to herein means a component exclusive of a volatile solvent. [(B) Alkoxide compound of an element selected among Si, Ti, Zr and Al]

The alkoxide compound of an element selected among Si, Ti, Zr and Al as the specified alkoxide (B) which is preferably used in the invention is a hydrolyzable, polymerizable compound having a polymerizable functional group in a structure thereof and functioning as a crosslinking agent, and when the specified alkoxide (B) is polycondensed with the specified hydrophilic polymer (A), a firm film having a crosslinking structure is formed.

The specified alkoxide (B) is preferably a compound represented by the following formula (2B), and in order to cure the hydrophilic layer, in forming a crosslinking structure, the foregoing specified hydrophilic polymer (A) and the specified alkoxide (B) represented by the following formula (2B) are mixed, and the mixture is applied on a surface of a substrate, and heated (dried).

Formula (2B) **(R¹²)ₖ-Y-(OR¹³)₄₋ₖ**

In the formula (2B), R¹² represents a hydrogen atom, an alkyl group or an aryl group; R¹³ represents an alkyl group or an aryl group; Y represents Si, Al, Ti or Zr; and k represents an integer of from 0 to 2. When R¹² and R¹³ each represents an alkyl group, the carbon atom number of the alkyl group is preferably from 1 to 4. The alkyl group and the aryl group may each have a substituent, and examples of the substituent which can be introduced include a halogen atom, an amino group and a mercapto group. This compound is a low-molecular weight compound and preferably has a molecular weight of not more than 1,000.

Specific examples of the specified alkoxide (B) represented by the formula (2B) will be given below, but it should not be construed that the invention is limited thereto. In the case where Y represents Si, namely silicon is contained in the specified alkoxide, examples thereof include trimethoxysilane, triethoxysilane, tripropoxysilane, tetramethoxysilane, tetraethoxysilane, tetrapropoxysilane, methyltrimethoxysilane, ethyltrimethoxysilane, propyltrimethoxysilane, methyltriethoxysilane, ethyltriethoxysilane, propyltriethoxysilane, dimethyldimethoxysilane, diethyldiethoxysilane, γ-chloropropyltriethoxysilane, γ-mercaptopropyltrimethoxysilane, γ-mercaptopropyltriethoxysilane, γ-aminopropyltriethoxysilane, phenyltrimethoxysilane, phenyltriethoxysilane, phenyltripropoxysilane, diphenyldimethoxysilane and diphenyldiethoxysilane. Of these, tetramethoxysilane, tetraethoxysilane, methyltrimethoxysilane, ethyltrimethoxysilane, methyltriethoxysilane, ethyltriethoxysilane, dimethyldiethoxysilane, phenyltrimethoxysilane, phenyltriethoxysilane, diphenyldimethoxysilane and diphenyldiethoxysilane are especially preferable.

In the case where Y represents Al, namely aluminum is contained in the specified alkoxide, examples thereof include trimethoxy aluminate, triethoxy aluminate, tripropoxy aluminate and tetraethoxy aluminate.

In the case where Y represents Ti, namely titanium is contained in the specified alkoxide, examples thereof include trimethoxy titanate, tetramethoxy titanate, triethoxy titanate, tetraethoxy titanate, tetrapropoxy titanate, chlorotrimethoxy titanate, chlorotriethoxy titanate, ethyltrimethoxy titanate, methyltriethoxy titanate, ethyltriethoxy titanate, diethyldiethoxy titanate, phenyltrimethoxy titanate and phenyltriethoxy titanate.

In the case where Y represents Zr, namely zirconium is contained in the specified alkoxide, examples thereof include zirconates corresponding to the above-exemplified titanium-containing compounds.

Of these, alkoxides wherein Y represents Si are preferable from the viewpoint of film properties.

The specified alkoxide (B) according to the invention may be used singly or in combination of two or more kinds thereof.

The specified alkoxide (B) is preferably used in an amount in the range of from 5 to 80 % by mass, and more preferably from 10 to 70 % by mass in terms of a non-volatile component in the hydrophilic composition of the invention.

The specified alkoxide (B) is easily available as a commercial product and is also obtainable by a known synthesis method, for example, a reaction between each metal chloride and an alcohol.

### [(C) Non-volatile catalyst]

In the hydrophilic composition of the invention, by dissolving the specified hydrophilic polymer (A) and preferably further a crosslinking component such as the specified alkoxide (B) in a solvent and well stirring the solution, these components are hydrolyzed and polycondensed to form an organic/inorganic composite sol liquid, and a hydrophilic layer having high hydrophilicity and high film strength is formed by this sol liquid. In preparing the organic/inorganic composite sol liquid, in order to accelerate the hydrolysis and polycondensation reaction, a non-volatile catalyst is contained in the hydrophilic composition according to the invention.

As the non-volatile catalyst (C) which is used in the invention, a catalyst capable of hydrolyzing and polycondensing the foregoing alkoxide compound (B) and accelerating a reaction for forming a linkage with the specified hydrophilic polymer (A) is chosen. Examples of such a catalyst include metal complex catalysts and non-volatile acidic or basic compounds. An acidic or basic compound can be used as it is. Alternatively, an acidic or basic compound is used in a state that it is dissolved in a solvent such as water and alcohols (these catalysts will be hereinafter also referred to inclusively as "acidic catalyst" and "basic catalyst", respectively).

The catalyst is especially preferably a metal complex catalyst. The metal complex catalyst is a metal complex constituted of a metal element selected among those belonging to the groups 2A, 3B, 4A and 5A of the periodic table and an oxo or hydroxyl oxygen-containing compound selected among β-diketones, keto esters, hydroxycarboxylic acids or esters thereof, amino alcohols and enolic active hydrogen compounds.

Of the constitutional metal elements, elements of the group 2A (for example, Mg, Ca, Sr and Ba), elements of the group 3B (for example, Al and Ga), elements of the group 4A (for example, Ti and Zr) and elements of the group 5A (for example, V, Nb and Ta) are preferable, and each of them forms a complex having an excellent catalytic effect. Above all, complexes obtained from Zr, Al or Ti are excellent and preferable.

In the invention, examples of the oxo or hydroxyl oxygen-containing compound which constitutes a ligand of the foregoing metal complex include β-diketones (for example, acetylacetone, acetylacetone (2,4-pentanedione) and 2,4-heptanedione), keto esters (for example, methyl acetoacetate, ethyl acetoacetate and butyl acetoacetate), hydroxycarboxylic acids and esters thereof (for example, lactic acid, methyl lactate, salicylic acid, ethyl salicylate, phenyl salicylate, malic acid, tartaric acid and methyl tartarate), keto alcohols (for example, 4-hydroxy-4-methyl-2-pentanone, 4-hydroxy-2-pentanone, 4-hydroxy-4-methyl-2-heptanone and 4-hydroxy-2-heptanone), amino alcohols (for example, monoethanolamine, N,N-dimethylethanolamine, N-methyl-monoethanolamine, diethanolamine and triethanolamine), enolic active hydrogen compounds (for example, methylolmelamine, methylolurea, methylolacrylamide and diethyl malonate) and compounds having a substituent on the methyl group, methylene group or carbonyl carbon of acetylacetone (2,4-pentanedione).

The ligand is preferably an acetylacetone or an acetylacetone derivative. In the invention, the acetylacetone derivative refers to a compound having a substituent on the methyl group, methylene group or carbonyl carbon of acetylacetone. Examples of the substituent which is substituted on the methyl group of acetylacetone include a linear or branched alkyl group, a linear or branched acyl group, a linear or branched hydroxyalkyl group, a linear or branched carboxyalkyl group, a linear or branched alkoxy group and a linear or branched alkoxyalkyl group each having from 1 to 3 carbon atoms; examples of the substituent which is substituted on the methylene group of acetylacetone include a linear or branched carboxyalkyl group and a linear or branched hydroxyalkyl group each having from 1 to 3 carbon atoms as well as a carboxyl group; and examples of the substituent which is substituted on the carbonyl carbon of acetylacetone include an alkyl group having from 1 to 3 carbon atoms, and in this case, a hydrogen atom is added to the carbonyl oxygen to form a hydroxyl group.

Preferred specific examples of the acetylacetone derivative include ethylcarbonylacetone, n-propylcarbonylacetone, i-propylcarbonylacetone, diacetylacetone, 1-acetyl-1-propionyl-acetylacetone, hydroxyethylcarbonylacetone, hydroxypropylcarbonylacetone, acetoacetic acid, acetopropionic acid, diacetoacetic acid, 3,3-diacetopropionic acid, 4,4-diacetobutyric acid, carboxyethylcarbonylacetone, carboxypropylcarbonylacetone and diacetone alcohol. Of these, acetylacetone and diacetylacetone are especially preferable. The complex of the foregoing acetylacetone derivative with the foregoing metal element is a mononuclear complex in which from 1 to 4 acetylacetone derivative molecules are coordinated per metal element. When the coordination number of the metal element is greater than the total coordination number of the acetylacetone derivative, ligands commonly used in usual complexes such as a water molecule, a halogen ion, a nitro group and an ammonio group may be coordinated on the metal element.

Preferred examples of the metal complexe include a tris(acetylacetonato)aluminum complex salt, a di-(acetylacetonato)aluminum aquocomplex, a mono-(acetylacetonato)aluminum chlorocomplex salt, a di-(diacetylacetonato) aluminum complex salt, ethylacetoacetate aluminum diisopropylate, aluminum tris(ethylacetoacetate), cyclic aluminum oxide isopropylate, a tris(acetylacetonato)barium complex salt, a di(acetylacetonato)titanium complex salt, a tris(acetylacetonato)titanium complex salt, a di-i-propoxy bis(acetylacetonato)titanium complex salt, zirconium tris(ethylacetoacetate) and a zirconium tris(benzoic acid) complex salt. These metal complexes exhibit excellent stability in an aqueous coating solution and are excellent in an effect for accelerating the gelation in a sol-gel reaction at the heat drying. Above all, ethylacetoacetate aluminum diisopropylate, aluminum tris(ethylacetoacetate), a di(acetylacetonato)titanium complex salt and zirconium tris(ethylacetoacetate) are especially preferable.

In this specification, the description of a counter salt of the foregoing metal complex is omitted. The kind of the counter salt is arbitrary so far as it is a water-soluble salt which keeps the electric charge as a complex compound neutral. Salts which can be stoichiometrically kept neutral, for example, nitrates, halogenic acid salts, sulfates and phosphates, are useful. The behavior of a silica sol-gel reaction of the metal complex is described in detail in J. Sol-Gel. Sci. and Tec., 16, 209 (1999). As its reaction mechanism, the following scheme may be presumed. That is, it is thought that the metal complex takes a coordination structure and is stable in a coating solution and in a dehydration condensation reaction starting with a heating (drying) step after coating, accelerates crosslinking according to a mechanism similar to an acid catalyst. In any event, the use of this metal complex made it possible to improve the stability with time of the coating solution and the surface quality of the film and to attain high hydrophilicity and high durability.

The non-volatile catalyst (C) according to the invention is preferably used in an amount in the range of from 0.1 to 50 % by mass, and more preferably from 5 to 25 % by mass in terms of a non-volatile component in the hydrophilic composition of the invention. Also, the catalyst (C) may be used singly or in combination of two or more kinds thereof.

The foregoing metal complex catalyst is easily available as a commercial product and is also obtainable by a known synthesis method, for example, a reaction between each metal chloride and an alcohol.

In the hydrophilic composition of the invention, in addition to the foregoing (A), (B) and (C) components, various compounds can be used jointly depending upon the purpose so far as the effects of the invention are not hindered. The components which can be used jointly are hereunder described.

### [Surfactant]

In the invention, in order to enhance film surface properties of the foregoing hydrophilic composition, it is preferable to use a surfactant. Examples of the surfactant include nonionic surfactants, anionic surfactants, cationic surfactants, ampholytic surfactants and fluorocarbon based surfactants.

The nonionic surfactant which is used in the invention is not particularly limited, and conventionally known nonionic surfactants can be used. Examples thereof include polyoxyethylene alkyl ethers, polyoxyethylene alkylphenyl ethers, polyoxyethylene polystyrylphenyl ethers, polyoxyethylene polyoxypropylene alkyl ethers, glycerin fatty acid partial esters, sorbitan fatty acid partial esters, pentaerythritol fatty acid partial esters, propylene glycol mono-fatty acid esters, sucrose fatty acid partial esters, polyoxyethylene sorbitan fatty acid partial esters, polyoxyethylene sorbitol fatty acid partial esters, polyethylene glycol fatty acid esters, polyglycerin fatty acid partial esters, polyoxyethylenated castor oils, polyoxyethylene glycerin fatty acid partial esters, fatty acid diethanolamides, N,N-bis-2-hydroxyalkylamines, polyoxyethylene alkylamines, triethanolamine fatty acid esters, trialkylamine oxides, polyethylene glycol and a copolymer of polyethylene glycol and polypropylene glycol.

The anionic surfactant which is used in the invention is not particularly limited, and conventionally known anionic surfactants can be used. Examples thereof include fatty acid salts, abietic acid salts, hydroxyalkanesulfonic acid salts, alkanesulfonic acid salts, dialkylsulfosuccinic acid esters, linear alkylbenzenesulfonic acid salts, branched alkylbenzenesulfonic acid salts, alkylnaphthalenesulfonic acid salts, alkylphenoxypolyoxyethylene propylsulfonic acid salts, polyoxyethylene alkylsulfophenyl ether salts, N-methyl-N-oleyltaurin sodium salts, N-alkylsulfosuccinic acid monoamide disodium salts, petroleum sulfonic acid salts, sulfated beef tallow oil, sulfuric ester salts of a fatty acid alkyl ester, alkylsulfuric ester salts, polyoxyethylene alkyl ether sulfuric ester salts, fatty acid monoglyceride sulfuric ester salts, polyoxyethylene alkylphenyl ether sulfuric ester salts, polyoxyethylene styrylphenyl ether sulfuric ester salts, alkylphosphoric ester salts, polyoxyethylene alkyl ether phosphoric ester salts, polyoxyethylene alkylphenyl ether phosphoric ester salts, a partially saponified product of a styrene/maleic anhydride copolymer, a partially saponified product of an olefin/maleic anhydride copolymer and naphthalenesulfonic acid salt formalin condensates.

The cationic surfactant which is used in the invention is not particularly limited, and conventionally known cationic surfactants can be used. Examples thereof include alkylamine salts, quaternary ammonium salts, polyoxyethylene alkylamine salts and polyethylene polyamine derivatives.

The ampholytic surfactant which is used in the invention is not particularly limited, and conventionally known ampholytic surfactants can be used. Examples thereof include carboxybetaines, aminocarboxylic acids, sulfobetaines, aminosulfuric esters and imidazolines.

In the foregoing surfactants, the "polyoxyethylene" can also be given a different reading as "polyoxyalkylene", for example, polyoxymethylene, polyoxypropylene and polyoxybutylene. In the invention, those surfactants can also be used.

Furthermore, examples of the preferred surfactant include fluorocarbon based surfactants containing a perfluoroalkyl group in a molecule thereof. Examples of such a fluorocarbon based surfactant include anionic types (for example, perfluoroalkylcarboxylic acid salts, perfluoroalkylsulfonic acid salts and perfluoroalkylphosphoric esters); ampholytic types (for example, perfluoroalkylbetaines); cationic types (for example, perfluoroalkyltrimethylammonium salts); and nonionic types (for example, perfluoroalkylamine oxides, perfluoroalkyl ethylene oxide adducts, oligomers containing a perfluoroalkyl group and a hydrophilic group, oligomers containing a perfluoroalkyl group and a lipophilic group, oligomers containing a perfluoroalkyl group, a hydrophilic group and a lipophilic group and urethanes containing a perfluoroalkyl group and a lipophilic group). Also, fluorocarbon based surfactants described in JP-A-62-170950, JP-A-62-226143 and JP-A-60-168144 can be favorably exemplified.

The surfactant is preferably used in an amount in the range of from 0.001 to 10 % by mass, and more preferably from 0.01 to 5 % by mass in terms of a non-volatile component in the hydrophilic composition of the invention. Also, the surfactant can be used singly or in combination of two or more kinds thereof.

### (Antimicrobial agent)

In order to impart antimicrobial properties, anti-fungal properties and anti-algal properties to the hydrophilic member of the invention, an antimicrobial agent can be contained in the hydrophilic coating solution composition. In the formation of a hydrophilic layer, it is preferable to contain a hydrophilic, water-soluble antimicrobial agent. By containing the hydrophilic, water-soluble antimicrobial agent, a surface-hydrophilic member which is excellent in antimicrobial properties, anti-fungal properties and anti-algal properties is obtainable without impairing the surface hydrophilicity.

It is preferable that a compound which does not reduce the hydrophilicity of the hydrophilic member is added as the antimicrobial agent. Examples of such an antimicrobial agent include inorganic antimicrobial agents and water-soluble organic antimicrobial agents. As the antimicrobial agent, ones exhibiting an antimicrobial effect against fungi existing in the surroundings, for example, bacteria represented by *Staphylococcus aureus* and *Escherichia coli* and *Eumycetes* such as fungi and yeasts are useful.

Examples of the organic antimicrobial agent include phenol ether derivatives, imidazole derivatives, sulfone derivatives, N-haloalkylthio compounds, anilide derivatives, pyrrole derivatives, quaternary ammonium salts, pyridine based compounds, triazine based compounds, benzisothiazoline based compounds and isothiazoline based compounds.

Specific examples thereof 1,2-benzisothiazolin-3-one, N-fluorodichloromethylthiophthalimide, 2,3,5,6-tetrachloroisophthalonitrile, N-trichloromethylthio-4-cyclohexene-1,2-dicarboxyimide, copper 8-quinolinate, bis-(tributyltin) oxide, 2-(4-thiazolyl)benzimidazole (hereinafter referred to as "TBZ"), methyl 2-benzimidazole carbamate (hereinafter referred to as "BCM"), 10,10'-oxybisphenoxy arsine (hereinafter referred to as "OBPA"), 2,3,5,6-tetrachloro-4-(methylsulfone)pyridine, bis(2-pyridylthio-1-oxide)zinc (hereinafter referred to as "ZPT"), N,N-dimethyl-N'-(fluorodichloromethylthio)-N'-phenylsulfamide (dichlorfluanid), poly(hexamethylenebiguanid) hydrochloride, dithiol-2,2'-bis(benzmethylamide), 2-methyl-4,5-trimethylene-4-isothiazolin-3-one, 2-bormo-2-nitro-1,3-propanediol, hexahydro-1,3-tris(2-hydroxyethyl)-s-triazine, p-chloro-m-xylenol and 1,2-benzisothiazolin-3-one. However, it should not be construed that the invention is limited thereto.

Such an organic antimicrobial agent can be properly chosen and used while taking into consideration hydrophilicity, water resistance, sublimation properties, safety, etc. Of the organic antimicrobial agents, 2-bromo-2-nitro-1,3-propanediol, TBZ, BCM, OBPA and ZPT are preferable in view of hydrophilicity, ant-bacterial effect and cost.

As the inorganic antimicrobial agent, mercury, silver, copper, zinc, iron, lead and bismuth can be exemplified in the order of a high sterilization effect. Examples thereof include antimicrobial agents obtained by supporting a metal (for example, silver, copper, zinc and nickel) or a metal ion thereof on a silicate based carrier, a phosphate based carrier, an oxide, glass, potassium titanate, an amino acid; etc. Specific examples thereof zeolite based antimicrobial agents, calcium silicate based antimicrobial agents, zirconium phosphate based antimicrobial agents, calcium phosphate based antimicrobial agents, zinc oxide based antimicrobial agents, soluble glass based antimicrobial agents, silica gel based antimicrobial agents, active carbon based antimicrobial agents, titanium oxide based antimicrobial agents, titania based antimicrobial agents, organometal based antimicrobial agents, ion exchanger ceramic based antimicrobial agents, stratiform phosphate-quaternary ammonium based antimicrobial agents and antimicrobial stainless steel. However, it should not be construed that the invention is limited thereto.

Examples of naturally occurring antimicrobial agents include chitosan which is a basic polysaccharide obtained by hydrolysis of chitin contained in crustaceans such as crabs and shrimps.

A trade name "HOLON KILLER BEADS CELLER" of Nikko Co., which is composed of an amino metal having a metal compounded on both sides of an amino acid, is preferable in the invention.

Such an antimicrobial agent is nonvolatile; is easy to mutually act on the polymer or the crosslinking agent component of the hydrophilic layer; and is stably molecularly dispersible or solid dispersible. Also, such an antimicrobial agent is easily exposed effectively on the surface of the hydrophilic layer and when wetted with water, does not elute and is able to hold its effect over a long period of time. Furthermore, it does not affect the human body. The antimicrobial agent can be stably dispersed in the hydrophilic layer or the coating solution and does not cause deterioration the hydrophilic layer or the coating solution.

Of the foregoing antimicrobial agents, silver based inorganic antimicrobial agents and water-soluble organic antimicrobial agents are the most preferable in view of the matter that the antimicrobial effect is large. A silver zeolite having silver supported on a zeolite as a silicate based carrier, an antimicrobial agent having silver supported on a silica gel, 2-bromo-2-nitro-1,3-propanediol, TPN, TBZ, BCM, OBPA and ZPT are especially preferable. Especially preferred examples of a commercially available silver zeolite based antimicrobial agent include ZEOPMIC (available from Shinagawa Fuel Co., Ltd.), SILWELL (available from Fuji Silysia Chemical Ltd.) and BACTENON (available from Japan Electronic Materials Corporation). Besides, NOVARON (available from Toagosei Co., Ltd.) having silver supported on an inorganic ion exchanger ceramic, ATOMY BALL (available from Catalysts & Chemicals Ind. Co., Ltd.) and SAN-AI BAC P (available from San-Ai Oil Co., Ltd.) which is a triazine based antimicrobial agent are also preferable.

The content of the antibacterial agent is generally from 0.001 to 10 % by mass, preferably from 0.005 to 5 % by mass, more preferably from 0.01 to 3 % by mass, especially preferably from 0.02 to 1.5 % by mass, and most preferably from 0.05 to 1 % by mass in terms of a non-volatile component in the hydrophilic composition. When the content of the antibacterial agent is 0.001 % by mass or more, an effective antimicrobial agent can be obtained. Also, when the content of the antibacterial agent is not more than 10 % by mass, the hydrophilicity is not reduced; the properties with time do not become worse; and the antifouling properties and anti-fogging properties are not adversely affected.

### [Inorganic fine particle]

The hydrophilic composition of the invention may contain an inorganic fine particle for the purposes of enhancing the cured film strength and hydrophilicity of the hydrophilic layer to be formed. Examples of the inorganic fine particle which is favorably used include silica, alumina, magnesium oxide, titanium oxide, magnesium carbonate, calcium alginate and mixtures thereof.

The inorganic fine particle preferably has an average particle size of from 5 nm to 10 µm, and more preferably from 0.5 to 3 µm. When the particle size of the inorganic fine particle falls within the foregoing range, it is possible to form a film with excellent hydrophilicity in which the inorganic fine particle is stably dispersed in the hydrophilic layer and the film strength of the hydrophilic layer is sufficiently kept. The foregoing inorganic fine particle is easily available as a commercial product such as a colloidal silica dispersion.

The inorganic fine particle according to the invention is preferably used in an amount in the range of not more than 20 % by mass, and more preferably not more than 10 % by mass in terms of a non-volatile component in the hydrophilic composition of the invention. Also, the inorganic fine particle can be used singly or in combination of two or more kinds thereof.

### [Ultraviolet ray absorber]

In the invention, an ultraviolet ray absorber can be used from the viewpoints of an enhancement of the weather resistance and an enhancement of the durability of the hydrophilic member.

Examples of the ultraviolet ray absorber include benzotriazole based compounds described in JP-A-58-185677, JP-A-61-190537, JP-A-2-782, JP-A-5-197075 and JP-A-9-34057; benzophenone based compounds described in JP-A-46-2784, JP-A-5-194483 and U.S. Patent No. 3,214,463; cinnamic acid based compounds described in JP-B-48-303492, JP-B-56-21141 and JP-A-10-88106; triazine based compounds described in JP-A-4-298503, JP-A-8-53427, JP-A-8-239368, JP-A-10-182621 and JP-T-8-501291; compounds described in *Research Disclosure,* No. 24239; compounds capable of absorbing ultraviolet rays to emit fluorescence, as represented by stilbene based compounds and benzoxazole based compounds; and so-called fluorescent brighteners.

The addition amount of the ultraviolet ray absorber is properly chosen depending upon the purpose, and in general, it is preferably from 0.5 to 15 % by mass in terms of a non-volatile component in the hydrophilic composition.

### [Antioxidant]

For the purpose of enhancing the stability of the hydrophilic member of the invention, an antioxidant can be added in the coating solution for forming a hydrophilic layer. Examples of the antioxidant include those described in EP-A-223739, EP-A-309401, EP-A-309402, EP-A-310551, EP-A-310552, EP-A-459416, DE-A-3435443, JP-A-54-48535, JP-A-62-262047, JP-A-63-113536, JP-A-63-163351, JP-A-2-262654, JP-A-2-71262, JP-A-3-121449, JP-A-5-61166, JP-A-5-119449 and U.S. Patents Nos. 4,814,262 and 4,980,275.

The addition amount of the antioxidant is properly chosen depending upon the purpose and is preferably from 0.1 to 8 % by mass in terms of a non-volatile component in the hydrophilic composition.

### [High-molecular weight compound]

For the purpose of adjusting film physical properties of the hydrophilic layer, various high-molecular weight compounds can be added in the coating solution for forming a hydrophilic layer of the hydrophilic member of the invention within the range where the hydrophilicity is not hindered. Examples of the high-molecular weight compound which can be used include acrylic polymers, polyvinyl alcohol resins, polyvinyl butyral resins, polyurethane resins, polyamide resins, polyester resins, epoxy resins, phenol resins, polycarbonate resins, polyvinyl formal resins, shellac, vinyl based resins, acrylic resins, rubber based resins, waxes and other natural resins. Such a high-molecular weight compound may be used in combination with two or more kinds thereof. Of these, vinyl based copolymers obtainable by copolymerization with an acrylic monomer are preferable. In addition, with respect to the copolymerization composition of a high-molecular weight binder, copolymers containing, as a structural unit, a "carboxyl group-containing monomer", an "alkyl methacrylate" or an "alkyl acrylate" are also preferably used.

### [Other additives]

Furthermore, in addition to the foregoing, for example, a leveling additive, a matting agent, a wax for adjusting film physical properties and a tackifier for improving adhesion to the substrate within the range where the hydrophilicity is not hindered can be contained as the need arises.

Specific examples of the tackifier include high-molecular weight adhesive polymers described on pages 5 to 6 of JP-A-2001-49200 (for example, copolymers made of an ester of (meth)acrylic acid and an alcohol having an alkyl group having from 1 to 20 carbon atoms, an ester of (meth) acrylic acid and an alicyclic alcohol having from 3 to 14 carbon atoms and an ester of (meth)acrylic acid and an aromatic alcohol having from 6 to 14 carbon atoms); and low-molecular weight tackiness-imparting resins having a polymerizable unsaturated bond.

The addition amount of such an additive is properly chosen depending upon the purpose and is preferably from 0.1 to 5 % by mass relative to the non-volatile components in the hydrophilic composition.

From the viewpoints of anti-abrasion properties, acid resistance and alkali resistance, the coating solution for forming a hydrophilic layer of the hydrophilic member of the invention can contain chlorides, nitrates or alkoxides of zirconia and organic complexes. Examples of chlorides of zirconia include zirconium chloride, zirconium oxychloride (octahydrate) and chlorine-containing zirconium alkoxides, Zr(OCₘH₂ₘ₊₁)ₓCl_{y} (m, x and y: an integer, (x + y) = 4); examples of nitrates of zirconium include zirconium oxynitrate (dihydrate); examples of alkoxides of zirconium include zirconium ethoxide, zirconium propoxide, zirconium isopropoxide, zirconium butoxide and zirconium t-butoxide; and examples of organic complexes include acetylacetone derivatives, and specific examples thereof include tetrakis(acetylacetonato)zirconium, bis(acetylacetonato)-zirconium dibutoxide, bis(acetylacetonato)zirconium dichloride, tetrakis(3,5-heptanedionato)zirconium, tetrakis-(2,2,6,6-tetramethyl-3,5-heptanedionato)zirconium and bis-(2,2,6,6-tetramethyl-3,5-heptanedionato)zirconium diisopropoxide.

The foregoing zirconium compound is preferably used in an amount in the range of from 0 to 50 % by mass, and more preferably from 5 to 25 % by mass relative to the non-volatile components in the hydrophilic composition.

### <Hydrophilic member>

### [Undercoat layer]

The hydrophilic member of the invention has an undercoat layer between the substrate and the hydrophilic layer. The undercoat layer may be configured of a single layer or two or more layers. As a raw material of the undercoat layer, hydrophilic resins and water-dispersible latexes can be used.

Examples of the hydrophilic resin include polyvinyl alcohol (PVC), cellulose based resins [for example, methyl cellulose (MC), hydroxyethyl cellulose (HEC) and carboxymethyl cellulose (CMC)], chitins, chitosans, starch, ether linkage-containing resins [for example, polyethylene oxide (PEO), polyethylene glycol (PEG) and polyvinyl ether (PVE)] and carbamoyl group-containing resins [for example, polyacrylamide (PAAM) and polyvinylpyrrolidone (PVP)]. Also, carboxyl group-containing polyacrylic acid salts, maleic acid resins, alginic acid salts and gelatins can be exemplified.

Of these, at least one kind selected among polyvinyl alcohol based resins, cellulose based resins, ether linkage-containing resins, carbamoyl group-containing resins, carboxyl group-containing resins and gelatins is preferable, with polyvinyl alcohol (PVA) based resins and gelatins being especially preferable.

Examples of the water-dispersible latex include acrylic latexes, polyester based latexes, NBR resins, polyurethane based latexes, polyvinyl acetate based latexes, SBR resins and polyamide based latexes. Of these, acrylic latexes are preferable.

Each of the foregoing hydrophilic resin and water-dispersible latex may be used singly or in combination of two or more kinds thereof. The hydrophilic resin and the water-dispersible latex may be used jointly.

Also, a crosslinking agent capable of crosslinking the foregoing hydrophilic resin or water-dispersible latex may be used.

As the crosslinking agent which can be applied in the invention, a known crosslinking agent capable of forming crosslinking by heat can be used. Examples of general thermal crosslinking agents include those as described in Crosslinking Agent Handbook, written by Shinzo YAMASHITA and Tosuke KANEKO and published by Taiseisha Ltd. (1981). The crosslinking agent which is used in the invention is not particularly limited so far as it has two or more functional groups and is effectively crosslinkable with the hydrophilic resin or water-dispersible latex. Specific examples of the thermal crosslinking agent include polycarboxylic acids (for example, polyacrylic acid); amine compounds (for example, polyethyleneimine); polyepoxy compounds (for example, ethylene or propylene glycol diglycidyl ether, tetraethylene glycol diglycidyl ether, nonaethylene glycol diglycidyl ether, polyethylene or polypropylene glycol glycidyl ether, neopentyl glycol diglycidyl ether, 1,6-hexanediol diglycidyl ether, trimethylolpropane triglycidyl ether and sorbitol polyglycidyl ether); polyaldehyde compounds (for example, glyoxal and terephthalaldehyde); polyisocyanate compounds (for example, tolylene diisocyanate, hexamethylene diisocyanate, diphenylmethane isocyanate, xylylene diisocyanate, polymethylene polyphenyl isocyanate, cyclohexyl diisocyanate, cyclohexane phenylene diisocyanate, naphthalene-1,5-diisocyanate, isopropylbenzene-2,4-diisocyanate and a polypropylene glycol/tolylene diiosyanate addition reactant); block polyisocyanate compounds; silane coupling agents (for example, tetraalkoxysilanes); metal crosslinking agents (for example, acetyl acetonates of aluminum, copper or iron(III)); and polymethylol compounds (for example, trimethylolmelamine and pentaerythritol). Of these thermal crosslinking agents, water-soluble crosslinking agents are preferable from the viewpoints of easiness of the preparation of a coating solution and prevention of a reduction of the hydrophilicity of the prepared hydrophilic layer.

The total amount of the foregoing hydrophilic resin and/or water-dispersible latex in the undercoat layer is preferably from 0.01 to 20 g/m², and more preferably from 0.1 to 10 g/m².

The composition for forming an undercoat layer may contain a catalyst, and the catalyst may be a volatile catalyst or a non-volatile catalyst. As general catalysts, an acidic or basic compound can be used as it is or in a state that it is dissolved in a solvent such as water and alcohols (these catalysts will be hereinafter also referred to inclusively as "acidic catalyst" and "basic catalyst", respectively). In dissolving the acidic or basic compound in a solvent, its concentration is not particularly limited and may be properly chosen depending upon characteristics of the acidic or basic compound to be used, a desired content of the catalyst, etc. Here, in the case where the concentration of the acidic or basic compound which constitutes the catalyst is high, the rate of hydrolysis and polycondensation tends to become fast. However, when a basic catalyst of a high concentration is used, there may be a possibility that a precipitate is formed in the sol solution. Therefore, when the basic catalyst is used, its concentration is desirably not more than 1 N as calculated in terms of a concentration in the aqueous solution.

The kind of the acidic catalyst or basic catalyst is not particularly limited. When it is required to use a catalyst having a high concentration, a catalyst constituted of an element which does not substantially remain in the coated layer after drying is desirable. Concretely, examples of the acidic catalyst include hydrogen halides (for example, hydrochloric acid), nitric acid, sulfuric acid, sulfurous acid, hydrogen sulfide, perchloric acid, hydrogen peroxide, carbonic acid, carboxylic acids (for example, formic acid and acetic acid) and substituted carboxylic acids in which in a structural formula represented by RCOOH, R is substituted with other element or a substituent and sulfonic acids (for example, benzenesulfonic acid); and examples of the basic compound include ammoniacal bases (for example, ammonia water) and amines (for example, ethylamine and aniline).

It is more preferable that the undercoat layer of the hydrophilic member of the invention contains a non-volatile catalyst. The "non-volatile catalyst" as referred to herein is a catalyst other than those having a boiling point of lower than 125 °C. In another word, the non-volatile catalyst refers to a catalyst having a boiling point of 125 °C or higher, a catalyst which does' not originally have a boiling point (inclusive of those which do not cause phase changes such as thermal decomposition), etc.

The non-volatile catalyst which is used in the invention is not particularly limited, and examples thereof include metal chelate compounds, silane coupling agents and acidic or basic compounds, all of which are non-volatile.

The foregoing metal chelate compound (hereinafter also referred to as "metal complex") is not particularly limited, and examples thereof include metal complexes constituted of a metal element selected among those belonging to the groups 2A, 3B, 4A and 5A of the periodic table and an oxo or hydroxyl oxygen-containing compound selected among β-diketones, keto esters, hydroxycarboxylic acids or esters thereof, amino alcohols and enolic active hydrogen compounds.

Of the constitutional metal elements, elements of the group 2A (for example, Mg, Ca, Sr and Ba), elements of the group 3B (for example, Al and Ga), elements of the group 4A (for example, Ti and Zr) and elements of the group 5A (for example, V, Nb and Ta) are preferable, and each of them forms a complex having an excellent catalytic effect. Above all, complexes obtained from Zr, Al or Ti are excellent and preferable.

Concretely, the same metal complexes as those in the non-volatile catalyst (C) can be exemplified.

In the invention, the silane coupling agent which is used as the non-volatile catalyst is not particularly limited, and examples thereof include silane coupling agents having a functional group exhibiting acidity or alkalinity. In more detail, examples of the silane coupling agent include silane coupling agents having a functional group exhibiting acidity (for example, peroxo acids, carboxylic acids, carbohydrazonic acids, carboximidic acids, sulfonic acids, sulfinic acids, sulfenic acids, selenonic acids, seleninic acids, selenenic acids, telluronic acids and the foregoing alkali metal salts) and silane coupling agents having a functional group exhibiting basicity such as an amino group.

The undercoat layer is preferably one obtained by hydrolyzing and polymerizing a composition containing at least an alkoxide compound of an element selected among Si, Ti, Zr and Al and a non-volatile catalyst. As the alkoxide compound of an element selected among Si, Ti, Zr and Al, the same alkoxide compounds as those in the specified alkoxide (B) can be exemplified.

The non-volatile catalyst (C) according to the invention is preferably used in an amount in the range of from 0 to 50 % by mass, and more preferably from 5 to 25 % by mass in terms of a non-volatile component in the composition for forming a hydrophilic layer according to the invention. The non-volatile catalyst (C) may be used singly or in combination of two or more kinds thereof.

As to the thus obtained undercoat layer, in the case where the non-volatile catalyst is contained and exists therein without losing its activity, and in particular, it is made to exist on the surface, too, thereby further providing the hydrophilic layer on the undercoat layer, the adhesion at an interface between the undercoat layer and the hydrophilic layer becomes extremely high. In other words, even after the formation of a coated layer, the reaction of the silane coupling group of the specified hydrophilic polymer (A) and the specified alkoxide (B) in the undercoat layer is advanced due to the non-volatile catalyst, whereby the adhesion is more enhanced. Furthermore, since the non-volatile catalyst is of a low molecular weight, it is thought that the non-volatile catalyst is present in the vicinity of the surface of the undercoat layer, thereby more accelerating the reaction of the silane coupling agent of the specified hydrophilic polymer (A) and the specified alkoxide in the undercoat layer. Since general silane coupling group-containing polymers are low in hydrophilicity, such a general silane coupling group-containing polymer is unevenly distributed on the surface, and the foregoing effect can be hardly expected. However, since the specified hydrophilic polymer (A) of the invention is high in hydrophilicity, it is thought that the specified hydrophilic polymer (A) is uniformly present in the inside of the film, thereby tremendously enhancing the adhesion.

Also, as to the undercoat layer of the hydrophilic member of the invention, by providing fine irregularities by plasma etching or incorporating a metal particle, it is possible to further enhance the adhesion at an interface between the undercoat layer and the hydrophilic layer.

### [Preparation of hydrophilic composition]

The preparation of the hydrophilic composition can be carried out by dissolving the specified hydrophilic polymer (A) and the non-volatile catalyst (C) and further the specified alkoxide (B) in a solvent such as ethanol and stirring the solution. The reaction temperature is preferably from room temperature to 80 °C; the reaction time, namely a time for continuing stirring, is preferably in the range of from 1 to 72 hours; and by advancing the hydrolysis and polycondensation of the both components by this stirring, an organic/inorganic composite sol liquid can be obtained.

The solvent which is used in preparing the foregoing hydrophilic composition containing the specified hydrophilic polymer (A), the specified metal alkoxide (B) and the non-volatile catalyst (C) is not particularly limited so far as it is able to uniformly dissolve and disperse these components therein. The solvent is preferably an aqueous solvents, for example, methanol, ethanol and water are preferable.

As described previously, the preparation of the organic/inorganic composite sol liquid (hydrophilic composition) for forming a hydrophilic layer from the hydrophilic composition of the invention utilizes a so-gel method. The sol-gel method is described in detail in Sumio SAKUHANA, Sol-Gel-Ho No Kagaku (Science of Sol-Gel Process), published by Agune Shofu Sha (1988); and Ken HIRASHIMA, Saishin Sol-Gel-Ho Niyoru Kinosei Hakumaku Sakusei Gij utsu (Functional Thin Film Formation Technology according to Newest Sol-Gel Method), published by General Technology Center (1992). In the invention, the methods as described in these documents can be applied to the preparation of the hydrophilic composition.

The hydrophilic member of the invention can be obtained by coating an adequate substrate with a solution containing such a hydrophilic composition of the invention and drying the hydrophilic composition. That is, the hydrophilic member of the invention has a hydrophilic layer formed by coating a substrate with the foregoing hydrophilic composition of the invention and heating (drying) the hydrophilic composition.

In the formation of the hydrophilic layer, with respect to the heating (drying) condition after applying (coating with) a solution containing the hydrophilic composition, from the viewpoint of efficiently forming a high-density crosslinking structure, drying is preferably performed at a temperature in the range of from 50 to 200 °C for from about 2 minutes to one hour, and more preferably at a temperature in the range of from 80 to 160 °C for from 5 to 30 minutes. Also, as a heating measure, a known measure, for example, use of a dryer having a temperature-adjusting function is preferably employed.

Also, as to the hydrophilic member of the invention, in the case where the hydrophilic layer and the undercoat layer are coated on the substrate, the catalyst can be mixed immediately before coating on the substrate. Concretely, it is preferable that the hydrophilic composition is applied (coated) immediately after mixing the catalyst or within a time of up to one hour after mixing the catalyst. When the hydrophilic composition is used for the coating after mixing the catalyst and allowing it to stand for a long period of time, the viscosity of the hydrophilic composition increases, whereby a defect such as coating unevenness may possibly be generated. It is also preferable that other components are mixed immediately before coating with the hydrophilic composition. In that case, however, the hydrophilic composition may be stored for a long period of time after mixing these other components.

### [Substrate]

The substrate which is used in the invention is not particularly limited. Any of glasses, plastics, metals, ceramics, woods, stones, cements, concretes, fibers, textiles, papers, leathers, combinations thereof and stacks thereof can be favorably utilized. Of these, glass substrates and plastic substrates are especially preferable as the substrate.

Examples of the glass substrate include glass plates provided with an inorganic compound layer which is formed of a metal oxide (for example, silicon oxide, aluminum oxide, magnesium oxide, titanium oxide, tin oxide, zirconium oxide, sodium oxide, antimony oxide, indium oxide, bismuth oxide, yttrium oxide, cerium oxide, zinc oxide and ITO (indium tin oxide)); a metal halide (for example, magnesium fluoride, calcium fluoride, lanthanum fluoride, cerium fluoride, lithium fluoride and thorium fluoride); or the like. Also, float sheet glass, figured sheet glass, ground sheet glass, wire glass, crosswire glass, tempered glass, laminated glass, multilayered glass, vacuum glass, security glass and high-heat insulating Low-E multilayered glass can be used depending upon the purpose. Though the foregoing hydrophilic layer can be coated on a raw sheet glass as it is, for the purpose of enhancing the adhesion of the hydrophilic layer, one surface or both surfaces of the sheet glass can be subjected to a surface hydrophilization treatment such as an oxidation method and a roughing method as the need arises. Examples of the foregoing oxidation method include a corona discharge treatment, a glow discharge treatment, a chromic acid treatment (wet type), a flame treatment, a hot blast treatment and an ozone or ultraviolet ray irradiation treatment. As the roughing method, mechanical roughing by sand blast, brush polishing, etc. can be applied.

The inorganic compound layer can be configured of a single layer or multiple layers. The inorganic compound layer is also able to maintain the light transmittance depending upon its thickness. Also, the inorganic compound layer can be made to act as an antireflection layer. Examples of a method for forming the inorganic compound layer which can be applied include known methods such as coating methods (applying method) (for example, a dip coating method, a spin coating method, a flow coating method, a spray coating method, a roll coating method and a gravure coating method); and vapor phase methods including a physical vapor deposition (PVD) method and a chemical vapor deposition (CVD) method (for example, a vacuum vapor deposition method, a reactive vapor deposition method, an ion beam assist method, a sputtering method and an ion plating method).

The plastic substrate which is used in the invention is not particularly limited. The substrate which is used as an optical member is chosen while taking into consideration optical characteristics such as transparency, refractive index and dispersibility and also chosen while taking into consideration various physical properties, for examples, physical characteristics (inclusive of strengths such as impact resistance and flexibility), heat resistance, weather resistance and durability depending upon the use purpose. Examples of the plastic substrate include films or sheets made of a polyester, polyethylene, polypropylene, cellophane, triacetyl cellulose, diacetyl cellulose, acetyl cellulose butyrate, polyvinyl chloride, polyvinylidene chloride, polyvinyl alcohol, polyethylene vinyl alcohol, polystyrene, a polycarbonate, polymethylpentene, polysulfone, polyether ketone, an acrylic resin, a nylon, a fluorocarbon resin, a polyimide, polyether imide, polyether sulfone or the like. Of these, polyester films of polyethylene terephthalate, polyethylene naphthalate, etc. are preferable. These materials may be used singly or in combination of two or more kinds thereof in a form such as a mixture, a copolymer and a stack depending upon the use purpose. The thickness of the plastic substrate varies with a material to be stacked. For example, in a portion where a number of curved surfaces are present, a thin plastic substrate is favorable, and one having a thickness of from about 6 to 50 µm is useful. When the plastic substrate is used for a flat surface or is required to have strength, one having a thickness of from 50 to 400 µm is useful.

For the purpose of enhancing the adhesion between the substrate and the undercoat layer, one surface or both surfaces of the substrate can be subjected to a surface hydrophilization treatment such as an oxidation method and a roughing method, if desired. Examples of the foregoing oxidation method include a corona discharge treatment, a glow discharge treatment, a chromic acid treatment (wet type), a flame treatment, a hot blast treatment and an ozone or ultraviolet ray irradiation treatment. As the roughing method, mechanical roughing by sand blast, brush polishing, etc. can be applied.

As the plastic substrate, one obtained by forming the inorganic compound layer as described in the glass plate on a plastic plate can also be used. In that case, the inorganic compound layer can also be made to act as an antireflection layer. In the case where the inorganic compound layer is formed on the plastic plate, the same measure as that in the foregoing inorganic substrate can be applied for the formation.

In the case where the inorganic compound layer is formed on the transparent plastic substrate, a hard coat layer may be formed between the both layers. By providing the hard coat layer, not only the hardness on the surface of the substrate is enhanced, but the surface of the substrate becomes smooth. Therefore, the adhesion between the transparent plastic substrate and the inorganic compound layer is enhanced; an enhancement of the scratch resistance strength can be achieved; and the generation of a crack on the inorganic compound layer to be caused due to bending of the substrate can be inhibited. By using such a substrate, the mechanical strength of the hydrophilic member can be improved. The material quality of the hard coat layer is not particularly limited so far as it has transparency, adequate strength and mechanical strength. For example, resins which are curable upon irradiation with ionizing radiations or ultraviolet rays and thermo-curable resins can be used. Above all, ultraviolet ray-curable acrylic reins, organosilicon based resins and thermo-curable polysiloxane resins are especially preferable. It is more preferable that such a resin has a refractive index equal or approximate to a refractive index of the transparent plastic substrate.

A coating method of such a hard coat layer is not particularly limited, and an arbitrary method is employable so far as it is able to achieve uniform coating. When a thickness of the hard coat layer is 3 µm or more, a sufficient strength is obtainable. However, in view of transparency, coating precision and handling, the thickness of the hard coat layer is preferably in the range of from 5 to 7 µm. Furthermore, by mixing and dispersing an inorganic or organic particle having an average particle size of from 0.01 to 3 µm in the hard coat layer, it is possible to apply a light diffusing treatment which is generally called an antiglare treatment. Such a particle is not particularly limited so far as it is transparent. However, a low-refractive index material is preferable, and silicon oxide and magnesium fluoride are especially preferable in view of stability, heat resistance and the like. The light diffusing treatment can also be achieved by providing irregularities on the surface of the hard coat layer.

### [Layer configuration at the use of hydrophilic member]

When the hydrophilic member of the invention is used while expecting an effect for revealing antifouling properties and/or anti-fogging properties, it can be used upon proper addition of another layer depending upon the purpose, form or use place. The layer configuration which is added as the need arises is hereunder described.

### (1) Adhesive layer:

When the hydrophilic member of the invention is stuck on another substrate and used, an adhesive which is a pressure-sensitive adhesive is favorably used as an adhesive layer on the back surface of the substrate. As the adhesive, adhesives which are generally used for an adhesive sheet, for example, rubber based adhesives, acrylic adhesives, silicone based adhesives, vinyl ether based adhesives and styrene based adhesives can be used.

When optical transparency is required, adhesives useful for an optical application are chosen. When coloration, semi-transparency or a pattern with a mat tone is required, it is possible to bring the effect by adding a dye or an organic or inorganic fine particle to the adhesive in addition to patterning on the substrate.

When a tackifier is required, a resin, for example, tackiness-imparting resins (for example, rosin based resins, terpene based resins, petroleum resins, styrene based resins and hydrogenation products thereof) can be used singly or in admixture.

The adhesive strength of the adhesive which is used in the invention is of generally called strong adhesion and is 200 g/25 mm or more, preferably 300 g/25 mm or more, and more preferably 400 g/25 mm or more. The "adhesive strength" as referred to herein is a value as measured by a 180-degree peeling test according to JIS Z0237.

### (2) Release layer:

When the hydrophilic member of the invention has the foregoing adhesive layer, a release layer can be further added. In order to bring release properties, it is preferable that a release agent is contained in the release layer. As the release agent, in general, silicone based release agents composed of a polyorganosiloxane, fluorocarbon based compounds, long-chain alkyl-modified products of polyvinyl alcohol, long-chain alkyl-modified production of polyethyleneimine and the like can be used. Also, various release agents, for example, hot melt type release agents and monomer type release agents capable of curing a releasable monomer by means of radical polymerization, cationic polymerization, polycondensation reaction, etc. and besides, copolymer based resins, for example, acryl-silicone based copolymer resins, acryl-fluorocarbon based copolymer resins and urethane-silicone-fluorocarbon based copolymer resins, resin blends of a silicone based resin and an acrylic resin and resin blends of a fluorocarbon based resin and an acrylic resin are useful. Also, a hard coat release layer obtained by curing a curable composition containing any one of a fluorine atom and/or a silicon atom and an active energy ray-polymerizable group-containing compound may be formed.

### (3) Other layers:

A protective layer may be provided on the hydrophilic layer. The protective layer has a function for preventing injuring on the hydrophilic surface at the handling, shipment or storage or the like or a reduction of the hydrophilicity to be caused due to the adhesion of a staining substance. As the protective layer, the hydrophilic polymer layer used in the foregoing release layer can be used. The protective layer is peeled away after sticking the hydrophilic member onto an adequate substrate.

### [Form of structure]

The structure having the hydrophilic layer of the invention may be fed in a sheet-like form, a roll-like form or a ribbon-like form. For the purpose of sticking onto an adequate substrate, the structure may be fed in a form in which it is previously cut.

In the case where the hydrophilic member having the hydrophilic layer coated thereon is applied (used or stuck) to a windowpane, etc., the transparency is important from the viewpoint of securing a field of view. The hydrophilic layer of the invention has excellent transparency and even when it is thick, can be made compatible with durability without impairing the degree of transparency. The thickness of the hydrophilic layer of the invention is preferably from 0.01 g/m² to 100 g/m², more preferably from 0.05 g/m² to 50 g/m², and most preferably from 0.1 g/m² to 20 g/m² in terms of a dry coverage. The case where the thickness is 0.01 g/m² or more is preferable from the viewpoint that sufficient hydrophilicity and durability are obtainable; and the case where the thickness is not more than 100 g/m² is preferable from the viewpoint that a problem is caused in fabrication properties (for example, the non-generation of a crack).

From the viewpoints of fabrication properties (for example, the non-generation of a crack) and sufficient durability, the thickness of the undercoat layer is preferably from 0.01 g/m² to 100 g/m², more preferably from 0.05 g/m² to 50 g/m², and most preferably from 0.1 g/m² to 20 g/m² in terms of a dry coverage.

The transparency is evaluated by measuring a light transmittance in a visible light region (from 400 nm to 800 nm) by a spectrophotometer. The light transmittance is preferably in the range of from 100 % to 70 %, more preferably from 95 % to 75 %, and most preferably from 95 % to 80 %. When the light transmittance falls within this range, the hydrophilic member having a hydrophilic layer coated thereon can be applied to various applications without disturbing the visibility.

The hydrophilic member of the invention can be obtained by applying (coating with) a coating solution composition for forming a hydrophilic layer on an adequate substrate and heating (drying) it to form a surface hydrophilic layer. The heating temperature and heating time for forming a hydrophilic layer are not particularly limited so far as the solvent in the sol liquid can be removed and a firm film can be formed. In view of manufacture aptitude and the like, the heating temperature is preferably not higher than 150 °C, and the heating time is preferably within one hour.

The hydrophilic member of the invention can be prepared by a known coating method without particular limitations. Examples of the coating method which can be applied include a spray coating method, a dip coating method, a flow coating method, a spin coating method, a roll coating method, a film applicator method, a screen printing method, a bar coater method, painting with a brush and painting with a sponge.

For example, in the case where an anti-fogging effect is expected, a material to which the hydrophilic member of the invention can be applied is a transparent material. Examples thereof include a transparent glass substrate, a transparent plastic substrate, a lens, a prism and a mirror.

As the glass, any of glasses, for example, soda glass, flint glass and boro-silicate glass may be used. Also, float sheet glass, figured sheet glass, ground sheet glass, wire glass, crosswire glass, tempered glass, laminated glass, multilayered glass, vacuum glass, security glass and high-heat insulating Low-E multilayered glass can be used depending upon the purpose.

Examples of applications to which the member having an anti-fogging effect can be applied include mirrors (for example, a vehicle rearview mirror, a bathroom mirror, a washroom mirror, a dental mirror and a road mirror); lenses (for example, a spectacle lens, an optical lens, a camera lens, an endoscope lens, a lighting lens, a semiconductor lens and a copier lens); prisms; window glasses of a building or a watchtower; other building material lenses; window glasses of various vehicles, for example, an automobile, a railway vehicle, an aircraft, a boat, a submersible, a snow vehicle, a gondola of ropeway and a gondola of amusement park; windshields of various vehicles, for example, an automobile, a railway vehicle, an aircraft, a boat, a submersible, a snow vehicle, a snowmobile, a motorcycle, a gondola of ropeway and a gondola of amusement park; protective goggles, sporting goggles, shields for protective mask, shields for sporting mask, shields of helmet and glasses of display case of frozen foods; cover glasses of measuring instrument; and films to be stuck on the surfaces of the foregoing articles. The most preferable application is an automobile or building glass.

Also, when the surface hydrophilic member of the invention is expected to have an antifouling effect, for example, in addition to glasses and plastics, any of metals, ceramics, woods, stones, cements, concretes, fibers, textiles, papers, combinations thereof and stacks thereof can be favorably utilized as the substrate.

Examples of applications to which the member having an antifouling effect can be applied include building materials, building exteriors such as outer walls and roofs, building interiors, window frames, window glasses, structural members, exteriors and paints of vehicles, for example, automobiles, railway vehicles, aircrafts, boats, bicycles and motorcycles, exteriors of machine apparatus and articles, dustproof covers and paints, traffic signs, various display devices, advertising columns, road noise-blocking walls, railway noise-blocking walls, bridges, exteriors and paints of guardrail, tunnel interiors and paints, insulators, solar battery covers, heat collecting covers of solar water heater, vinyl green houses, covers of vehicular lamp, residential facilities, toilet bowls, bathtubs, washing sinks, luminaires, luminaire covers, kitchen utensils, dishes, dish washers, dish driers, kitchen sinks, cooking microwave ovens, kitchen hoods, ventilation fans and films to be stuck onto surfaces of the foregoing articles.

The applications also include signboards, traffic signs, noise-proof walls, vinyl green houses, insulators, vehicle covers, tent materials, reflectors, shutters, screens, solar battery covers, heat collecting covers of solar water heater, etc., outdoor lamps, pavements, outdoor lightings, stones or tiles for artificial fall or artificial fountain, bridges, greenhouses, outer wall materials, wall-to-wall or glass-to-glass sealers, guardrails, verandas, vending machines, outdoor units of air conditioner, outdoor benches, various display apparatus, shutters, tollhouses, charge boxes, roof gutters, protective covers for vehicle lamp, dustproof covers and paints, paints of machine apparatus and articles, exteriors and paints of advertising column, structural members, residential facilities, toilet bowls, bathtubs, washing sinks, luminaires, kitchen utensils, dishes, dish driers, kitchen sinks, cooking microwave ovens, kitchen hoods, ventilation fans, window rails, window frames, tunnel interiors, tunnel lightings, window sashes, heat radiation fans for heat exchanger, pavements, mirrors for bathroom or washroom, vinyl green house ceilings, washstands, automobile bodies, films to be stuck onto the foregoing articles and stickers.

The surface hydrophilic member of the invention is also applicable to roof materials for snowy district, antennas, power transmission lines and the like. On that occasion, an excellent characteristic in snow accretion-preventing properties is obtained.

Also, when the surface hydrophilic member of the invention is expected to have quick-drying properties of water, etc., for example, in addition to glasses and plastics, any of metals, ceramics, woods, stones, cements, concretes, fibers, textiles, papers, combinations thereof and stacks thereof can be favorably utilized as the base material.

Examples of applications to which the member having quick-drying properties of water, etc. can be applied include building materials, building exteriors such as outer walls and roofs, building interiors, window frames, window glasses, structural members, exteriors and paints of vehicles, for example, automobiles, railway vehicles, aircrafts, boats, bicycles and motorcycles, exteriors of machine apparatus and articles, dustproof covers and paints, traffic signs, various display devices, advertising columns, road noise-blocking walls, railway noise-blocking walls, bridges, exteriors and paints of guardrail, tunnel interiors and paints, insulators, solar battery covers, heat collecting covers of solar water heater, vinyl green houses, covers of vehicular lamp, residential facilities, toilet bowls, bathtubs, washing sinks, luminaires, luminaire covers, kitchen utensils, dishes, dish washers, dish driers, kitchen sinks, cooking microwave ovens, kitchen hoods, ventilation fans and films to be stuck onto surfaces of the foregoing articles.

The applications also include signboards, traffic signs, noise-proof walls, vinyl green houses, insulators, vehicle covers, tent materials, reflectors, shutters, screens, solar battery covers, heat collecting covers of solar water heater, etc., outdoor lamps, pavements, outdoor lightings, stones or tiles for artificial fall or artificial fountain, bridges, greenhouses, outer wall materials, wall-to-wall or glass-to-glass sealers, guardrails, verandas, vending machines, outdoor units of air conditioner, outdoor benches, various display apparatus, shutters, tollhouses, charge boxes, roof gutters, protective covers for vehicle lamp, dustproof covers and paints, paints of machine apparatus and articles, exteriors and paints of advertising column, structural members, residential facilities, toilet bowls, bathtubs, washing sinks, luminaires, kitchen utensils, dishes, dish driers, kitchen sinks, cooking microwave ovens, kitchen hoods, ventilation fans, window rails, window frames, tunnel interiors, tunnel lightings, window sashes, heat radiation fans for heat exchanger, pavements, mirrors for bathroom or washroom, vinyl green house ceilings, washstands, automobile bodies, films to be stuck onto the foregoing articles and stickers. Also, in the case where the manufacturing process of a product to be used for such an application includes a drying step, the drying time can be shortened so that an effect for enhancing the productivity can also be expected.

### EXAMPLES

The invention is hereunder described in detail with reference to the following Examples, but it should not be construed that the invention is limited thereto.

### (Synthesis of macromonomer)

247 g of 1-methoxy-2-propanol was charged in a one-liter three-necked flask and heated and stirred at 80 °C under a nitrogen atmosphere. A solution of a mixture of 107 g of acrylamide, 16 g of 3-mercaptopropionic acid, 1.0 g of dimethyl 2,2'-azobis(2-methylpropionate) and 247 g of 1-methoxy-2-propanol was dropped therein over 2 hours, and thereafter, the mixture was further heated and stirred at 80 °C for 4 hours. After allowing the reaction solution to cool to room temperature, it was added to 2 liters of methanol, and a deposited white solid was filtered off and then dried in vacuo. A yield of the product was 98 g. It was confirmed from the measurement of an acid value that this product was a carboxylic acid-terminated polymer having a degree of polymerization of 20. 50 g of this carboxylic acid-terminated polymer was charged in a one-liter three-necked flask, to which was then added 532 g of dimethyl sulfoxide, and the mixture was heated and dissolved at 60°C. After allowing the solution to cool to room temperature, 45. 5 g of 2-hydroxyethyl acrylate, 24.7 g of diisopropyl carbodiimide and 12.8 g of 4-dimethylaminopyridine were successively added thereto, and the mixture was heated and stirred at 40 °C for 4 hours. Thereafter, 6.3 mL of acetic acid and 125 mL of ethanol were added thereto, and the mixture was further heated and stirred at 40 °C for 1.5 hours. After allowing the reaction solution to cool to room temperature, it was added to one liter of methanol, and a deposited white solid was filtered off and then dried in vacuo. A yield of the product was 48 g. It was confirmed from disappearance of the carboxylic acid by the measurement of an acid value that this product was a macromonomer having a polymerizable group introduced into an end thereof.

### (Synthesis of specified hydrophilic polymer (1))

163 g of dimethyl sulfoxide was charged in a 500-mL three-necked flask and heated and stirred at 80 °C under a nitrogen atmosphere. A solution of a mixture of 20 g of the foregoing macromonomer, 8.0 g of 3-triethoxysilylpropyl acrylamide, 1.2 g of dimethyl 2,2'-azobis(2-methylpropionate) and 163 g of 1-methoxy-2-propanol was dropped therein over 2 hours, and thereafter, the mixture was further heated and stirred at 80 °C for 4 hours. After allowing the reaction solution to cool to room temperature, it was added to one liter of methanol, and a deposited white solid was filtered off and then dried in vacuo. A yield of the product was 17.6 g. It was confirmed from the measurement of GPC (standard: polyethylene oxide) that this product was a specified hydrophilic polymer (1) having a structure of the foregoing Illustrative Compound (1) having a mass average molecular weight of 200,000.

Hereafter, specified hydrophilic polymers as used in the Examples were synthesized in the same measure as described above and used for the evaluation.

### (Example 1)

### [Hydrophilic sol-gel liquid]

10 g of the specified hydrophilic polymer (1) as the component (A), 0.1 g of acetylacetone as the non-volatile catalyst (C) and 0.1 g of tetraethyl orthotitanate were mixed in 100 g of purified water, and the mixture was stirred at room temperature for 2 hours to prepare a hydrophilic sol-gel liquid.

### [Hydrophilic composition]

2.5 g of a 5 % by mass aqueous solution of the following anionic surfactant was mixed in the foregoing hydrophilic sol-gel liquid to prepare a hydrophilic composition.

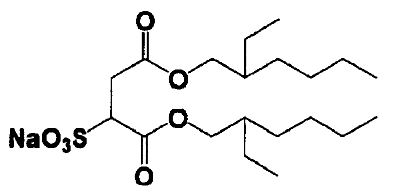

### [Sol-gel liquid for undercoat layer]

8 g of tetramethoxysilane as the component (B) was mixed in 200 g of ethyl alcohol, 10 g of acetylacetone as the non-volatile catalyst (C), 10 g of tetraethyl orthotitanate and 100 g of purified water, and the mixture was stirred at room temperature for 2 hours to prepare a sol-gel liquid for undercoat layer.

### [Composition for undercoat layer]

100 g of a 20 % by mass aqueous solution of a colloidal silica dispersion (SNOWTEX C), 30 g of a 5 % by mass aqueous solution of the foregoing anionic surfactant and 450 g of purified water were mixed in 500 g of the foregoing sol-gel liquid for undercoat layer to prepare a coating solution.

### [Coating method]

A float sheet glass (thickness: 2 mm) which is the most general transparent sheet glass was prepared; a surface of the sheet glass was hydrophilized by a UV/O₃ treatment for 10 minutes; and the foregoing composition for undercoat layer was spin coated and dried in an oven at 100 °C for 10 minutes to form an undercoat layer at a dry coverage of 0.1 g/m². After sufficiently cooling at room temperature, the foregoing hydrophilic composition was spin coated on the undercoat layer and dried in an oven at 100 °C for 10 minutes to form a hydrophilic layer at a dry coverage of 0.1 g/m².

### (Example 2)

A hydrophilic member was prepared in the same manner as in Example 1, except for changing the coating method to a method as described below.

A float sheet glass (thickness: 2 mm) which is the most general transparent sheet glass was prepared; a surface of the sheet glass was hydrophilized by a UV/O₃ treatment for 10 minutes; and the composition for undercoat layer of Example 1 was spin coated and dried in an oven at 100 °C for 10 minutes to form an undercoat layer at a dry coverage of 0.1 g/m². After sufficiently cooling at room temperature, the hydrophilic composition of Example 1 was bar coated on the undercoat layer and dried in an oven at 150 °C for 30 minutes to form a hydrophilic layer at a dry coverage of 3.0 g/m²

### (Example 3)

A hydrophilic member was prepared in the same manner as in Example 2, except for eliminating the non-volatile catalyst (C) of the composition for undercoat layer in Example 2.

### (Example 4)

A hydrophilic member was prepared in the same manner as in Example 2, except for changing the non-volatile catalyst (C) of the composition for undercoat layer in Example 2 to 0.05 g of a 1 N hydrochloric acid aqueous solution.

### (Examples 5 to 7)

Hydrophilic members were prepared in the same manner as in Example 2, except for changing the specified hydrophilic polymer (1) as the component (A) to one as described below.

Example 5: Specified hydrophilic polymer (2)

Example 6: Specified hydrophilic polymer (11)

Example 7: Specified hydrophilic polymer (24)

### (Examples 8 and 9)

Hydrophilic members were prepared in the same manner as in Example 2, except for changing the non-volatile catalyst (C) of the hydrophilic composition in Example 2 to one as described below.

Example 8: Ethyl acetoacetate aluminum diisopropylate (ALCH, manufactured by Kawaken Fine Chemicals Co., Ltd.), 0.2 g

Example 9: Zirconium chelate compound, 0.2 g

50 g of tetrabutoxyzirconium and 20 g of ethyl acetoacetate were charged in a reactor equipped with a stirrer, and the mixture was stirred at room temperature for one hour to obtain a zirconium chelate compound.

### (Examples 10 and 11)

Hydrophilic members were prepared in the same manner as in Example 2, except for changing the non-volatile catalyst (C) of the composition for undercoat layer in Example 2 to one as described below.

Example 10: Ethyl acetoacetate aluminum diisopropylate (ALCH, manufactured by Kawaken Fine Chemicals Co., Ltd.), 0.2 g

Example 11: Zirconium chelate compound, 0.2 g

50 g of tetrabutoxyzirconium and 20 g of ethyl acetoacetate were charged in a reactor equipped with a stirrer, and the mixture was stirred at room temperature for one hour to obtain a zirconium chelate compound.

### (Examples 12 to 14)

Hydrophilic members were prepared in the same manner as in Example 2, except for changing the substrate to one as described below.

Example 12: Commercially available mirror washed with UV/ozone

Example 13: Polyethylene terephthalate substrate (thickness: 50 µm) whose surface was hydrophilized by a glow treatment

Example 14: Aluminum substrate (thickness: 100 µm) degreased with an alkali

### (Examples 15 and 16)

Hydrophilic members were prepared in the same manner as in Example 2, except for coating with the hydrophilic composition of Example 2 at a dry coverage as described below to form a hydrophilic layer.

Example 15: Dry coverage, 10 g/m²

Example 16: Dry coverage, 30 g/m²

### (Examples 17 and 18)

Hydrophilic members were prepared in the same manner as in Example 2, except for adding 2 g of a compound as described below to the hydrophilic composition of the Example 2.

Example 17: Zirconium oxychloride

Example 18: Tetrakis(acetylacetonato)zirconium

### (Examples 19 and 20)

Hydrophilic members were prepared in the same manner as in Example 8, except for adding 0.5 g of a compound as described below to the hydrophilic composition of the Example 2.

Example 19: TBZ (manufactured by Chugoku Kogyo Co., Ltd.)

Example 20: ZEOMIC (manufactured by Sinanen Co., Ltd.)

### (Example 21)

### [Hydrophilic sol-gel liquid]

12 g of tetramethoxysilane as the component (B), 4 g of the specified hydrophilic polymer (1) as the component (A), 1.0 g of acetylacetone as the non-volatile catalyst (C) and 1.0 g of tetraethyl orthotitanate were mixed in 20 g of ethyl alcohol and 100 g of purified water, and the mixture was stirred at room temperature for 2 hours to prepare a hydrophilic sol-gel liquid.

### [Hydrophilic composition]

20 g of a 20 % by mass aqueous solution of a colloidal silica dispersion (SNOWTEX C), 4 g of a 5 % by mass aqueous solution of the anionic surfactant as described in Example 1 and 60 g of purified water were' mixed in the foregoing hydrophilic sol-gel liquid to prepare a hydrophilic composition.

### [Sol-gel liquid for undercoat layer]

8 g of tetramethoxysilane as the component (B) was mixed in 200 g of ethyl alcohol, 10 g of acetylacetone as the non-volatile catalyst (C), 10 g of tetraethyl orthotitanate and 100 g of purified water, and the mixture was stirred at room temperature for 2 hours to prepare a sol-gel liquid for undercoat layer.

### [Composition for undercoat layer]

100 g of a 20 % by mass aqueous solution of a colloidal silica dispersion (SNOWTEX C), 30 g of a 5 % by mass aqueous solution of the foregoing anionic surfactant and 450 g of purified water were mixed in 500 g of the foregoing sol-gel liquid for undercoat layer to prepare a coating solution.

### [Coating method]

A float sheet glass (thickness: 2 mm) which is the most general transparent sheet glass was prepared; a surface of the sheet glass was hydrophilized by a UV/O₃ treatment for 10 minutes; and the foregoing composition for undercoat layer was spin coated and dried in an oven at 100 °C for 10 minutes to form an undercoat layer at a dry coverage of 0.1 g/m². After sufficiently cooling at room temperature, the foregoing hydrophilic composition was spin coated on the undercoat layer and dried in an oven at 100 °C for 10 minutes to form a hydrophilic layer at a dry coverage of 0.1 g/m².

### (Example 22)

A hydrophilic member was prepared in the same manner as in Example 21, except for eliminating the non-volatile catalyst (C) of the composition for undercoat layer in Example 21.

### (Example 23)

A hydrophilic member was prepared in the same manner as in Example 21, except for changing the non-volatile catalyst (C) of the composition for undercoat layer in Example 21 to 0.2 g of a 1 N hydrochloric acid aqueous solution.

### (Examples 24 to 26)

Hydrophilic members were prepared in the same manner as in Example 21, except for changing the specified hydrophilic polymer (1) as the component (A) to one as described below.

Example 24: Specified hydrophilic polymer (2)

Example 25: Specified hydrophilic polymer (11)

Example 26: Specified hydrophilic polymer (24)

### (Examples 27 and 28)

Hydrophilic members were prepared in the same manner as in Example 21, except for changing the catalyst (C) of the hydrophilic composition in Example 21 to one as described below.

Example 27: Ethyl acetoacetate aluminum diisopropylate (ALCH, manufactured by Kawaken Fine Chemicals Co., Ltd.), 2 g

Example 28: Zirconium chelate compound, 2 g

50 g of tetrabutoxyzirconium and 20 g of ethyl acetoacetate were charged in a reactor equipped with a stirrer, and the mixture was stirred at room temperature for one hour to obtain a zirconium chelate compound.

### (Examples 29 to 31)

Hydrophilic members were prepared in the same manner as in Example 21, except for changing the specified alkoxide (B) of the hydrophilic composition in Example 21 to one as described below.

Example 29: Aluminum ethoxide

Example 30: Zirconium ethoxide

Example 31: Titanium ethoxide

### (Examples 32 and 33)

Hydrophilic members were prepared in the same manner as in Example 21, except for changing the catalyst (C) of the composition for undercoat layer in Example 21 to one as described below.

Example 32: Ethyl acetoacetate aluminum diisopropylate (ALCH, manufactured by Kawaken Fine Chemicals Co., Ltd.), 2 g

Example 33: Zirconium chelate compound, 2 g

50 g of tetrabutoxyzirconium and 20 g of ethyl acetoacetate were charged in a reactor equipped with a stirrer, and the mixture was stirred at room temperature for one hour to obtain a zirconium chelate compound.

### (Examples 34 to 36)

Hydrophilic members were prepared in the same manner as in Example 21, except for changing the substrate to one as described below.

Example 34: Commercially available mirror washed with UV/ozone

Example 35: Polyethylene terephthalate substrate (thickness: 50 µm) whose surface was hydrophilized by a glow treatment

Example 36: Aluminum substrate (thickness: 100 µm) degreased with an alkali

### (Examples 37 and 38)

Hydrophilic members were prepared in the same manner as in Example 21, except for changing the coating method to a method as described below.

Example 37: The hydrophilic composition was bar coated and dried in an oven at 100 °C for 10 minutes to form a hydrophilic layer at a dry coverage of 1.0 g/m².

Example 38: The hydrophilic composition was bar coated and prior to drying, subjected to fabrication while rotating at 200 rpm for 300 seconds by a spinner, to form a hydrophilic layer at a dry coverage of 15 g/m²

### (Examples 39 and 40)

Hydrophilic members were prepared in the same manner as in Example 21, except for adding 1.0 g of a compound as described below to the hydrophilic composition of the Example 21.

Example 39: Zirconium oxychloride

Example 40: Tetrakis(acetylacetonato)zirconium

### (Examples 41 and 42)

Hydrophilic members were prepared in the same manner as in Example 21, except for adding 0.2 g of a compound as described below to the hydrophilic composition of the Example 21.

Example 41: TBZ (manufactured by Chugoku Kogyo Co., Ltd.)

Example 42: ZEOMIC (manufactured by Sinanen Co., Ltd.)

### (Comparative Example 1)

A hydrophilic member of Comparative Example 1 was prepared in the same manner as in Example 21, except for eliminating the non-volatile catalyst (C) from the hydrophilic composition and not providing an undercoat layer.

### (Comparative Example 2)

A hydrophilic member of Comparative Example 2 was prepared in the same manner as in Example 21, except for eliminating the non-volatile catalyst (C) from the hydrophilic composition.

### (Comparative Example 3)

A hydrophilic member of Comparative Example 3 was prepared in the same manner as in Example 21, except for changing the non-volatile catalyst (C) of the hydrophilic composition to 0.2 g of a 1N hydrochloric acid aqueous solution.

### (Comparative Example 4)

A hydrophilic member of Comparative Example 4 was obtained in the same manner as in Example 21, except for replacing the specific hydrophilic polymer (1) of the invention with a comparative hydrophilic polymer (i) having the following structure and having a mass average molecular weight of 45,000 falling outside the scope of the invention [described as "comparative hydrophilic polymer (i)" in Table 1].

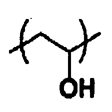

### (Comparative Example 5)

A hydrophilic member of Comparative Example 5 was obtained in the same manner as in Example 21, except for replacing the specific hydrophilic polymer (1) of the invention with a comparative hydrophilic polymer (ii) having the following structure and having a mass average molecular weight of 7,500 falling outside the scope of the invention [described as "comparative hydrophilic polymer (ii)" in Table 1].

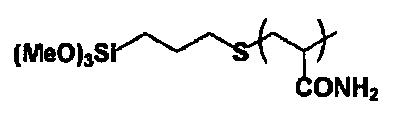

### (Comparative Example 6)

A surface hydrophilic member of Comparative Example 6 was obtained by sticking a photocatalyst film (HYDROTECT, manufactured by Toto Ltd.) on the surface of the substrate as used in the foregoing Examples in place of the hydrophilic layer according to the invention, to form a hydrophilic surface.

### (Evaluation of hydrophilic member)

### [Water resistance]

The hydrophilic member was dipped in extrapure water for 5 days, taken out and then air dried, and its contact angle was measured by using pure water. The smaller the change of the contact angle, the better the water resistance is. The where the change of the contact angle after dipping is not more than 2 degrees is designated as "A"; the case where it is from 2 to 7 degrees is designated as "B"; and the case where it is more than 7 degrees is designated as "C", respectively.

### [Surface free energy]

The degree of hydrophilicity of the hydrophilic layer surface is in general measured in terms of a droplet contact angle (as measured by using a contact angle meter, DropMaster 500 (manufactured by Kyowa Interface Science Co., Ltd.)). However, with respect to a surface with very high hydrophilicity as in the invention, there is a possibility that the droplet contact angle is not more than 10 degrees, and even not more than 5 degrees. Thus, in mutually comparing the degree of hydrophilicity, there is a limit. On the other hand, examples of a method for evaluating the degree of hydrophilicity on a solid surface in detail include a measurement of surface free energy. There are proposed various methods. In the invention, however, the surface free energy was measured by employing the Zisman plot method as one example. Concretely, the Zisman plot method is a measurement method in which by utilizing the properties that in an aqueous solution of an inorganic electrolyte, for example, magnesium chloride, its surface tension becomes large with an increase of the concentration thereof, a contact angle is measured in air under a room temperature condition by using the aqueous solution; a surface tension of the aqueous solution is taken on the abscissa, whereas a value obtained by reducing the contact angle into cos θ is taken on the ordinate; points of the aqueous solution of various concentrations are plotted to obtain a linear relationship; and the surface tension at cos θ = 1, namely at a contact angle = 0° is defined as surface free energy of the solid. The surface tension of water is 72 mN/m, and it may be said that the larger the value of surface free energy, the higher the hydrophilicity is.

### [Transparency]

In the case where the hydrophilic member having the hydrophilic layer coated thereon according to the invention is used in a windowpane, etc., the transparency is important from the viewpoint of securing a field of view. The hydrophilic layer of the invention has excellent transparency and even when it is thick, can be made compatible with durability without impairing the degree of transparency.

The transparency was evaluated by measuring a light transmittance in a visible light region (from 400 nm to 800 nm) by a spectrophotometer (U3000, manufactured by Hitachi, Ltd.).

### [Evaluation of anti-friction properties]

The surface of the obtained hydrophilic member was rubbed by a non-woven cloth (BEMCOT, manufactured by Asahi Chemical Fiber Co., Ltd.) in 250 reciprocations while applying a load of 200 g, and the change in texture before and after rubbing was visually observed.
A: No scar is observed on the surface before and after rubbing.
B: About one line of scar is observed on the surface before and after rubbing.
C: A number of scars are observed on the surface before and after rubbing.

### [Scratch strength]

A sapphire stylus having a diameter of 0.1 mm was scanned on the surface of the hydrophilic layer by applying a load while increasing a weight of every 5 g starting from 5 g, thereby evaluating a load at which the hydrophilic surface was injured (measured by a scratch strength tester, Type 18S, manufactured by Shinto Scientific Co. , Ltd.). Even if the load is large, when the hydrophilic surface is not injured, the durability is good.

### [Evaluation of anti-fogging properties]

A water vapor was applied to the surface of the above-obtained hydrophilic member daytime in a room under a fluorescent lamp; after keeping apart from the water vapor, the hydrophilic member was disposed under an environment at. 25 °C and 10 % RH; and a state of fogging and its change were organoleptically evaluated under a fluorescent lamp of the same irradiation condition as described above on a scale of three grades according to the following criteria.
A: Fogging is not observed.
B: Fogging is observed, but the surface is returned to the original state within ten seconds, whereby no fogging is observed.
C: Fogging is observed, and even after a lapse of 10 seconds, the surface is not returned to the original state.

### [Evaluation of antifouling properties]

A line was drawn with an oil based ink (oil based marker, manufactured by Mitsubishi Pencil Co., Ltd.) on the surface of the above-obtained hydrophilic member; water was continuously splashed; and whether or not the ink ran down was organoleptically evaluated on a scale of three grades according to the following criteria.
A: The ink comes off within one minute.
B: After a lapse of one minute, the ink comes off.
C: Even by performing splashing of water exceeding 2 minutes and over 10 minutes, the ink does not come off.

### [Evaluation of rate of drying of water]

About 1 cm³ of pure water was dropped on the surface of the above-obtained hydrophilic member; the hydrophilic member was allowed to stand under an environment at 25 °C and 50 % RH; and a time until the droplet was dried was measured by visual observation at every 5 minutes.

The evaluation results obtained according to the foregoing evaluation methods are shown in the following Table 1.

**Table 1**

| | Evaluation of performance | | | | | | | |
|---|---|---|---|---|---|---|---|---|
| | Surface free energy | Light transmittance | Anti-friction properties | Scratch strength | Anti-fogging properties | Antifouling properties | Water resistance | Rate of drying of water |
| Example 1 | 90 mNlm | 90 % | A | 155 g | A | A | A | 5 minutes |
| Example 2 | 89 mN/m | 89 % | A | 205 g | A | A | A | 5 minutes |
| Example 3 | 89 mN/m | 94 % | A | 105 g | A | A | A | 5 minutes |
| Example 4 | 88 mN/m | 92 % | A | 140 g | A | A | A | 5 minutes |
| Example 5 | 89 mN/m | 90 % | A | 200 g | A | A | A | 5 minutes |
| Example 6 | 87 mN/m | 88 % | A | 195 g | A | A | A | 5 minutes |
| Example 7 | 87 mN/m | 86 % | A | 185 g | A | A | A | 5 minutes |
| Example 8 | 90 mN/m | 94% | A | 190 g | A | A | A | 5 minutes |
| Example 9 | 91mN/m | 90 % | A | 200 g | A | A | A | 5 minutes |
| Example 10 | 88 mN/m | 89% | A | 200 g | A | A | A | 5 minutes |
| Example 11 | 89 mN/m | 88% | A | 190 g | A | A | A | 5 minutes |
| Example 12 | 88 mN/m | - | A | 200 g | A | A | A | 5 minutes |
| Example 13 | 87mN/m | 91% | A | 130 g | A | A | A | 5 minutes |
| Example 14 | 87 mN/m | - | A | 150 g | A | A | A | 5 minutes |
| Example 15 | 90 mN/m | 90 % | A | 245 g | A | A | A | 5 minutes |
| Example 16 | 89 mN/m | 85 % | A | 280 g | A | A | A | 5 minutes |
| Example 17 | 90 mN/m | 87 % | A | 230 g | A | A | A | 5 minutes |
| Example 18 | 90 mN/m | 86 % | A | 235 g | A | A | A | 5 minutes |
| Example 19 | 87 mN/m | 90 % | A | 210 g | A | A | A | 5 minutes |
| Example 20 | 89 mN/m | 91 % | A | 195 g | A | A | A | 5 minutes |
| Example 21 | 89 mN/m | 92 % | A | 200 g | A | A | A | 5 minutes |
| Example 22 | 88 mN/m | 89 % | B | 100 g | A | A | A | 5 minutes |
| Example 23 | 88 mN/m | 85 % | A | 130 g | A | A | A | 5 minutes |
| Example 24 | 90 mNlm | 92 % | A | 190 g | A | A | A | 5 minutes |
| Example 25 | 88 mNlm | 88 % | A | 210 g | A | A | A | 5 minutes |
| Example 26 | 89 mN/m | 90 % | A | 210 g | A | A | A | 5 minutes |
| Example 27 | 87 mNlm | 89 % | A | 215 g | A | A | A | 5 minutes |
| Example 28 | 87 mNlm | 89 % | A | 200 g | A | A | A | 5 minutes |
| Example 29 | 88 mNlm | 84 % | A | 190 g | A | A | A | 5 minutes |
| Example 30 | 88 mN/m | 89 % | A | 185 g | A | A | A | 5 minutes |
| Example 31 | 87 mN/m | 85 % | A | 190 g | A | A | A | 5 minutes |
| Example 32 | 86 mN/m | 88% | A | 210 g | A | A | A | 5 minutes |
| Example 33 | 89 mN/m | 85% | A | 205 g | A | A | A | 5 minutes |
| Example 34 | 87 mN/m | - | A | 190 g | A | A | A | 5 minutes |
| Example 35 | 86 mN/m | 92 % | A | 195g | A | A | A | 5 minutes |
| Example 36 | 90 mN/m | - | A | 190 g | A | A | A | 5 minutes |
| Example 37 | 89 mN/m | 90 % | A | 225 g | A | A | A | 5 minutes |
| Example 38 | 89 mN/m | 89% | A | 215 g | A | A | A | 5 minutes |
| Example 39 | 87 mN/m | 92 % | A | 255 g | A | A | A | 5 minutes |
| Example 40 | 90 mN/m | 89% | A | 270g | A | A | A | 5 minutes |
| Example 41 | 87 mN/m | 91 % | A | 195 g | A | A | A | 5 minutes |
| Example 42 | 89 mN/m | 88% | A | 210g | A | A | A | 5 minutes |
| Comparative Example 1 | 88 mN/m | 82 % | C | 5 g | A | A | B | 5 minutes |
| Comparative Example 2 | 87 mN/m | 85 % | B | 55 g | A | A | B | 5 minutes |
| Comparative Example 3 | 89 mN/m | 80 % | B | 65 g | A | A | A | 5 minutes |
| Comparative Example 4 | 70 mN/m | 82 % | C | 5 g | C | C | B | 25 minutes |
| Comparative Example 5 | 82 mN/m | 82% | B | 5 g | A | A | A | 5 minutes |
| Comparative Example 6 | 90 mN/m | 90 % | C | < 5g | A | A | A | 5 minutes |

It is noted from Table 1 that in the hydrophilic members having a hydrophilic layer formed by applying (coating with) a hydrophilic composition containing (A) a specified hydrophilic polymer, (B) a specified alkoxide compound and (C) a non-volatile catalyst according to the invention and heating (drying) the hydrophilic composition and having an undercoat layer provided between the substrate and the hydrophilic layer (Examples 21 to 42), the scratch strength remarkably increased as compared with that in the case where the undercoat layer is not provided and the hydrophilic composition does not contain the non-volatile catalyst (C) (Comparative Example 1) and the case where though the undercoat layer is provided, the hydrophilic composition does not contain the non-volatile catalyst (C) (Comparative Examples 2 and 3). Especially, in the case where the undercoat layer contains the non-volatile catalyst (Examples 21 and 24 to 42), results with excellent anti-friction properties were obtained as compared with those in Comparative Examples 1 to 3, and results with more excellent water resistance were obtained as compared with those in Comparative Examples 1 and 2.

Also, in the case where the specified hydrophilic polymer (A) is replaced by the comparative hydrophilic polymers (i) (Comparative Example 4) and (ii) (Comparative Example 5), the scratch strength was remarkably low as compared with that in the Examples. Furthermore, in Comparative Example 4, only results with inferior anti-friction properties, anti-fogging properties and antifouling properties were obtained.

Furthermore, in the hydrophilic members having a hydrophilic layer formed by coating with a hydrophilic composition containing (A) a specified hydrophilic polymer and (C) a non-volatile catalyst according to the invention and heating (drying) the hydrophilic composition and having an undercoat layer provided between the substrate and the hydrophilic layer (Examples 1 to 20), results with excellent scratch strength and anti-friction properties were similarly obtained, and hydrophilic members which are excellent in hydrophilicity, anti-fogging properties andantifouling properties were obtained.

Moreover, in the case where a commercially available hydrophilic layer is used in place of the hydrophilic layer and the undercoat film according to the invention (Comparative Example 6), the scratch strength is remarkably low as compared with that in the Examples; and only results with inferior anti-friction properties were obtained.

This application is based on Japanese Patent application JP 2007-63715, filed March 13, 2007, and Japanese Patent application JP 2008-21381, filed January 31, 2008, the entire contents of which are hereby incorporated by reference, the same as if fully set forth herein.

Although the invention has been described above in relation to preferred embodiments and modifications thereof, it will be understood by those skilled in the art that other variations and modifications can be effected in these preferred embodiments without departing from the scope and spirit of the invention.

## Claims

1. A hydrophilic member comprising, in the following order:
a substrate;
an undercoat layer; and
a hydrophilic layer formed by heating a hydrophilic composition comprising
a hydrophilic polymer having a structural unit represented by the following formula (I-a) and a structural unit represented by the following formula (I-b), and
a non-volatile catalyst: 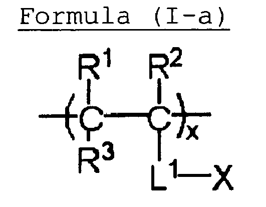 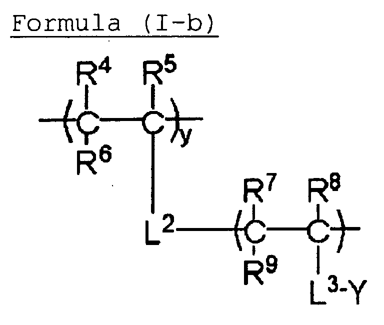
wherein R¹ to R⁹ each independently represents a hydrogen atom or a hydrocarbon group having not more than 8 carbon atoms; L¹, L² and L³ each independently represents a single bond or a polyvalent organic connecting group; x and y are each a composition ratio and represents a number satisfied with the relationships of 0 < x < 100, 0 < y < 100 and (x + y) = 100; X represents a partial structure represented by a formula, Si (OR¹⁰)ₘR¹¹₃₋ₘ, wherein m represents an integer of from 1 to 3, and R¹⁰ and R¹¹ each independently represents a hydrogen atom or a hydrocarbon group having not more than 8 carbon atoms; and Y represents -OH, -ORₐ, -CORₐ, -CO₂Rₑ, -CON(Rₐ)(R_{b}), -N(Rₐ)(R_{b}), -NHCOR_{d}, -NHCO₂Rₐ, -OCON(Rₐ)(R_{b}), -NHCON(Rₐ)(R_{b}), -SO₃Rₑ -OSO₃Rₑ, -SO₂R_{d} -NHSO₂R_{d} -SO₂N(Rₐ)(R_{b}), -N(Ra)(R_{b})(R_{c}), -N(Rₐ)(R_{b})(R_{c})(R_{g}), -PO₃(Rₑ)(R_{f}), -OPO₃(Re)(R_{f}) or -PO₃(R_{d})(Rₑ), wherein Rₐ, R_{b} and R_{c} each independently represents a hydrogen atom or a linear, branched or cyclic alkyl group having from 1 to 8 carbon atoms; R_{d} represents a linear, branched or cyclic alkyl group having from 1 to 8 carbon atoms; Rₑ and R_{f} each independently represents a hydrogen atom, a linear, branched or cyclic alkyl group having from 1 to 8 carbon atoms, an alkali metal, an alkaline earth metal or an onium; and R_{g} represents a linear, branched or cyclic alkyl group having from 1 to 8 carbon atoms, a halogen atom, an inorganic anion or an organic anion.

2. The hydrophilic member according to claim 1, wherein the hydrophilic composition further comprises an alkoxide compound of an element selected among Si, Ti, Zr and Al.

3. The hydrophilic member according to claim 1 or 2, wherein the undercoat layer comprises a non-volatile catalyst.

4. The hydrophilic member according to any one of claims 1 to 3, wherein the non-volatile catalyst is a metal complex comprising a metal element selected among metal elements belonging to the groups 2A, 3B, 4A and 5A of the periodic table and an oxo or hydroxyl oxygen-containing compound selected among β-diketones, keto esters, hydroxycarboxylic acids or esters thereof, amino alcohols and enolic active hydrogen compounds.

5. The hydrophilic member according to any one of claims 1 to 4, wherein the undercoat layer is formed by applying a composition comprising at least an alkoxide compound of an element selected among Si, Ti, Zr and Al and a non-volatile catalyst on the substrate and heating the applied composition.

6. The hydrophilic member according to any one of claims 1 to 5, wherein the hydrophilic composition further comprises colloidal silica.

7. A process for producing a hydrophilic member comprising:
forming an undercoat layer on a substrate; and
subsequently applying a hydrophilic composition comprising
a hydrophilic polymer having a structural unit represented by the following formula (I-a) and a structural unit represented by the following formula (I-b),
an alkoxide compound of an element selected among Si, Ti, Zr and Al, and
a non-volatile catalyst,
and heating the applied hydrophilic composition to form a hydrophilic layer: 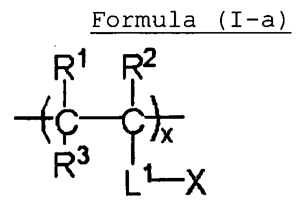 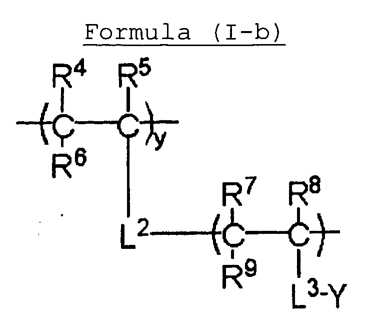 wherein R¹ to R⁹ each independently represents a hydrogen atom or a hydrocarbon group having not more than 8 carbon atoms; L¹, L² and L³ each independently represents a single bond or a polyvalent organic connecting group; x and y are each a composition ratio and represents a number satisfied with the relationships of 0 < x < 100, 0 < y < 100 and (x + y) = 100; X represents a partial structure represented by a formula, Si(OR¹⁰)ₘR¹¹₃₋ₘ, wherein m represents an integer of from 1 to 3, and R¹⁰ and R¹¹ each independently represents a hydrogen atom or a hydrocarbon group having not more than 8 carbon atoms; and Y represents -OH, -ORₐ, -CORₐ, -CO₂Rₑ, -CON(Rₐ)(R_{b}), -N(Rₐ) (R_{b}), -NHCOR_{d}, -NHCO₂Rₐ, -OCON(Rₐ)(R_{b}), -NHCON(Rₐ)(R_{b}), -SO₃Rₑ, -OSO₃Rₑ, -SO₂R_{d}, -NHSO₂R_{d}, -SO₂N(Rₐ)(R_{b}), -N(Rₐ)(R_{b})(R_{c}), -N(Rₐ)(R_{b})(R_{c})(R_{g}), -PO₃(Rₑ)(R_{f}), -OPO₃(Rₑ)(R_{f}) or -PO₃(R_{d})(Rₑ), wherein Rₐ, R_{b} and R_{c} each independently represents a hydrogen atom or a linear, branched or cyclic alkyl group having from 1 to 8 carbon atoms; R_{d} represents a linear, branched or cyclic alkyl group having from 1 to 8 carbon atoms; Rₑ and R_{f} each independently represents a hydrogen atom, a linear, branched or cyclic alkyl group having from 1 to 8 carbon atoms, an alkali metal, an alkaline earth metal or an onium; and Rg represents a linear, branched or cyclic alkyl group having from 1 to 8 carbon atoms, a halogen atom, an inorganic anion or an organic anion.
